(19) Europäisches Patentamt
European Patent Office
Office européen des brevets

(11) **EP 1 568 876 B1**

(12) **EUROPEAN PATENT SPECIFICATION**

(45) Date of publication and mention
of the grant of the patent:
**24.08.2011 Bulletin 2011/34**

(51) Int Cl.:
*F02D 35/02* ^(2006.01)   *G01M 15/00* ^(2006.01)

(21) Application number: **05004073.2**

(22) Date of filing: **24.02.2005**

(54) **Gas mixture temperature estimation apparatus for internal combustion engine**

Vorrichtung zur Schätzung der Temperatur des Gasgemisches in einer Brennkraftmaschine

Dispositif d'estimation de la température de mélange pour moteur à combustion interne

(84) Designated Contracting States:
**DE FR GB**

(30) Priority: **25.02.2004 JP 2004050301**

(43) Date of publication of application:
**31.08.2005 Bulletin 2005/35**

(73) Proprietor: **Toyota Jidosha Kabushiki Kaisha
Toyota-shi, Aichi 471-8571 (JP)**

(72) Inventors:
• **Ibuki, Taku
Toyota-shi
Aichi-ken 471-8571 (JP)**
• **Nakayama, Shigeki
Toyota-shi
Aichi-ken 471-8571 (JP)**

(74) Representative: **TBK
Bavariaring 4-6
80336 München (DE)**

(56) References cited:
**EP-A- 1 342 899    EP-A2- 1 132 608**

• **C. EIGLMEIER, H. LETTMAAN, G. STIESCH, G.P. MERKER: "A detailed phenomenological model for wall heat transfer prediction in diesel engines" PROCCEDINGS AUTOMOTIVE AND TRANSPORTATION TECHNOLOGY CONGRESS AND EXHIBITION, BARCELONA, SPAIN, OCT 1-3, 2001, SAE, 1 October 2001 (2001-10-01), pages 1-14, XP002326234**
• **LAUDENBACH A ET AL: "REAL TIME HEAT RELEASE CALCULATION FOR COMBUSTION ENGINES" PROCEEDINGS OF THE INTERNATIONAL SYMPOSIUM ON AUTOMOTIVE TECHNOLOGY AND AUTOMATION (ISATA). FLORENCE, MAY 20 - 24, 1991, CROYDON, AUTOMOTIVE AUTOMATION, GB, vol. SYMP. 24, 20 May 1991 (1991-05-20), pages 733-740, XP000308671**

**Description**

BACKGROUND OF THE INVENTION

Field of the Invention

The present invention relates to a gas mixture temperature estimation apparatus which is applicable to an internal combustion engine in which fuel for pilot injection is injected into a combustion chamber, and then fuel for main injection is injected into the combustion chamber in each operation cycle, and which estimates the temperature of a gas mixture produced by the main injection (hereinafter referred to as a "main gas mixture").

Description of the Related Art

The amount of emissions, such as $NO_x$, discharged from an internal combustion engine such as a spark-ignition internal combustion engine or a diesel engine has a strong correlation with the flame temperature (combustion temperature) after ignition. Therefore, controlling the flame temperature to a predetermined temperature effectively reduces the amount of emissions, such as $NO_x$. In general, since flame temperature cannot be detected directly, the flame temperature must be estimated so as to be controlled to the predetermined temperature. Meanwhile, the flame temperature changes with the temperature of a gas mixture before being ignited (hereinafter, may be simply referred to as "gas mixture temperature"). Accordingly, estimating the gas mixture temperature is effective for estimation of the flame temperature.

In particular, in the case of a diesel engine in which air-fuel mixture starts combustion by means of self ignition caused by compression, the ignition timing must be properly controlled in accordance with the operation state of the engine. The ignition timing greatly depends on the gas mixture temperature before ignition. Accordingly, estimating the gas mixture temperature is also necessary for proper control of the ignition timing.

In view of the above, a fuel injection apparatus for a diesel engine disclosed in Japanese Patent Application Laid-Open *(kokai)* No. 2001-254645 sets a target ignition timing in accordance with the operation state of an engine, and estimates the gas mixture temperature as measured at the target ignition timing on the basis of various operational state quantities which affect the gas mixture temperature, such as engine coolant temperature, intake air temperature, and intake pressure. Subsequently, the apparatus controls the manner of injection (e.g., injection timing and/or injection pressure) of fuel in such a manner that the estimated gas mixture temperature attains a predetermined temperature, to thereby control the ignition timing to coincide with the target ignition timing.

Incidentally, there has been know an internal combustion engine; specifically, a diesel engine, which is configured to perform pilot injection at least one time before main injection in each operation cycle so as to improve the ignitability of fuel (gas mixture). In such a case, when fuel injected by means of the main injection (accordingly, the main gas mixture) moves within the combustion chamber, a gas mixture produced through combustion caused by the pilot injection (in the present specification, not only a pre-ignition gas mixture produced by the pilot injection, but also a gas produced through combustion of the gas mixture will be referred to as a "pilot gas mixture") can be considered (assumed) to be stagnating in a generally annular configuration in the vicinity of the side wall (having a generally cylindrical inner wall surface) of the combustion chamber.

Therefore, until the main gas mixture (its forefront portion) reaches the pilot gas mixture stagnating in a generally annular configuration, the main gas mixture is surrounded by a gas having been taken into the combustion chamber (hereinafter referred to as the "cylinder interior gas"), and proceeds while taking the cylinder interior gas as a portion of the main gas mixture. Meanwhile, after the main gas mixture (its forefront portion) reaches the pilot gas mixture stagnating in a generally annular configuration, the main gas mixture is surrounded by the stagnating pilot gas mixture, and proceeds while taking the pilot gas mixture as a portion of the main gas mixture.

As is understood from the above, the temperature of the main gas mixture which proceeds within the combustion chamber after occurrence of the main injection is affected by the temperature of the cylinder interior gas until the main gas mixture (its forefront portion) reaches the pilot gas mixture stagnating in a generally annular configuration, and is affected by the temperature of the stagnating pilot gas mixture after the main gas mixture (its forefront portion) reaches the stagnating pilot gas mixture.

However, the above-described conventional apparatus estimates such a gas mixture temperature without consideration of at least the influence of the stagnating pilot gas mixture. Therefore, the estimated gas mixture temperature involves an error, and as a result the conventional apparatus cannot render the ignition timing accurately coincident with the target ignition timing.

## SUMMARY OF THE INVENTION

In view of the foregoing, an object of the present invention is to provide a gas mixture temperature estimation apparatus for an internal combustion engine which can accurately estimate temperature of a main gas mixture while assuming that a pilot gas mixture is stagnating in the vicinity of the side wall of a combustion chamber when the main gas mixture proceeds within the combustion chamber.

A gas mixture temperature estimation apparatus for an internal combustion engine according to the present invention comprises cylinder-interior-gas temperature estimation means, pilot-gas-mixture temperature estimation means, determination means, and main-gas-mixture temperature estimation means. The respective means will be described individually.

The cylinder-interior-gas temperature estimation means estimates temperature of a gas having been taken into a combustion chamber (cylinder interior gas such as new air or EGR gas). The temperature of the cylinder interior gas can be obtained under the assumption that the state of the cylinder interior gas confined within the combustion chamber adiabatically changes with movement of a piston.

The pilot-gas-mixture temperature estimation means estimates temperature of a pilot gas mixture, which is a gas mixture produced by means of pilot injection. The term "pilot gas mixture" used herein encompasses not only a pilot gas mixture before being ignited, but also a gas produced through combustion of the pilot gas mixture (hereinafter referred to as "post-ignition pilot gas mixture"). In other words, the term "pilot gas mixture" encompasses a gas related to combustion caused by the pilot injection, regardless of whether the gas is a pre-ignition gas mixture or a post-ignition gas mixture.

The pilot gas mixture (its forefront portion) proceeds while taking, as a portion of the pilot gas mixture, the cylinder interior gas, which serves as a peripheral gas that surrounds the pilot gas mixture. Accordingly, the temperature of the pilot gas mixture can be obtained by making use of the temperature of the cylinder interior gas. Specifically, the temperature of the pilot gas mixture can be obtained, as an adiabatic pilot gas mixture temperature, on the basis of, for example, the heat quantity (temperature) of fuel injected by means of pilot injection and the heat quantity (temperature) of a portion of the cylinder interior gas, which portion mixes with the fuel to thereby form the pilot gas mixture, and under the assumption that heat exchange with the outside does not occur in the course of mixing of the fuel and the portion of the cylinder interior gas.

The determination means determines whether the main gas mixture has reached the pilot gas mixture (a region occupied by the pilot gas mixture) under the assumption that the pilot gas mixture (after being combusted) is stagnating in a generally annular configuration in the vicinity of the side wall (having a generally cylindrical inner wall surface) of the combustion chamber. The term "side wall of the combustion chamber" used herein refers to, but is not limited to, the side wall of a cylinder, or the side wall of a cylindrical depression (hereinafter referred to as a "cavity") which is formed on the top surface of a piston concentrically with the center axis of the piston.

The thickness, in the radial direction, (hereinafter referred to as the "radial thickness") of the pilot gas mixture stagnating in a generally annular configuration can be obtained on the basis of, for example, a volume occupied by the pilot gas mixture. The volume occupied by the pilot gas mixture can be obtained from, for example, the quantity of fuel injected by means of the pilot injection, the excess air factor of the stagnating pilot gas mixture, the temperature and pressure of the stagnating pilot gas mixture, and the gas state equation regarding the stagnating pilot gas mixture.

Further, the position of a forefront portion of the main gas mixture propagating within the combustion chamber can be obtained as a function of time elapsed after the start of the main injection, in accordance with a predetermined empirical formula or the like. Therefore, the determination as to whether the main gas mixture (its forefront portion) has reached the stagnating pilot gas mixture (a region occupied by the pilot gas mixture) can be carried out on the basis of, for example, the position of the forefront portion of the main gas mixture and the radial thickness of the pilot gas mixture stagnating in a generally annular configuration.

The main-gas-mixture temperature estimation means estimates temperature of the main gas mixture. The main-gas-mixture temperature estimation means estimates the temperature of the main gas mixture by making use of the temperature of the cylinder interior gas in a period during which the main gas mixture is determined not to have reached the stagnating pilot gas mixture, and estimates the temperature of the main gas mixture by making use of the temperature of the pilot gas mixture after the main gas mixture is determined to have reached the stagnating pilot gas mixture.

As in the case of the pilot gas mixture, the main gas mixture proceeds while taking, as a portion of the main gas mixture, a peripheral gas that surrounds the main gas mixture. The above-described cylinder interior gas serves as the peripheral gas that surrounds the main gas mixture before the forefront portion of the main gas mixture reaches the stagnating pilot gas mixture, and the stagnating pilot gas mixture serves as the peripheral gas after the forefront portion of the main gas mixture has reached the stagnating pilot gas mixture.

Accordingly, the above-described configuration enables the temperature of the main gas mixture to be estimated from the temperature of the peripheral gas which is properly switched between the cylinder interior gas and the pilot gas mixture before and after the forefront portion of the main gas mixture reaches the stagnating pilot gas mixture. Specifically, the temperature of the main gas mixture can be obtained, as an adiabatic main-gas-mixture temperature, on the basis of, for example, the heat quantity (temperature) of fuel injected by means of main injection and the heat quantity (temperature) of a portion of the properly switched peripheral gas, which portion mixes with the fuel to thereby form the main gas mixture, and under the assumption that heat exchange with the outside does not occur in the course of the fuel and the portion of the peripheral gas mixing together. By virtue of the above configuration, the temperature of the main gas mixture can be accurately estimated before and after the forefront portion of the main gas mixture reaches the stagnating pilot gas mixture. As a result, the ignition timing can be rendered accurately coincident with the target ignition timing, on the basis of the accurately estimated temperature of the main gas mixture.

In the gas mixture temperature estimation apparatus according to the present invention, preferably, the determination means is configured so as to unevenly set the radial thickness of the pilot gas mixture stagnating in a generally annular configuration such that the thickness at a position corresponding to the injection direction of the pilot injection is thicker than that at a position not corresponding to the injection direction of the pilot injection.

Here, there will be considered an example case where the side wall surface of the combustion chamber (e.g., the inner wall surface of the cylinder or a side wall surface of the cavity) assumes a generally cylindrical shape, and fuel is simultaneously injected (pilot injection or main injection) from a plurality of injection openings of a fuel injection valve fixedly disposed on the cylinder head at a position corresponding to the center axis of the cylinder, in such a manner that the injected fuel disperses toward the side wall surface of the combustion chamber along a plurality of injection directions which are disposed at uniform angular intervals and extend along an imaginary cone centered on the center axis of the cylinder. In such a case, the radial thickness of the pilot gas mixture stagnating in a generally annular configuration can be considered to change in the circumferential direction such that the thickness at a position corresponding to each injection direction of the pilot injection is thicker than that at a position not corresponding to the injection direction of the pilot injection.

The degree of unevenness of the radial thickness of the pilot gas mixture stagnating in a generally annular configuration decreases with increasing number of the injection openings of the fuel injection valve. Accordingly, in the case where the number of the injection openings is relatively large, the unevenness can be ignored, and the radial thickness of the pilot gas mixture stagnating in a generally annular configuration can be assumed to be constant over the entire circumference. Meanwhile, when the number of the injection openings is relatively small, the unevenness cannot be ignored.

In view of the foregoing, when the number of the injection openings is relatively small (equal to or less than a predetermined number), as described above, the radial thickness of the stagnating pilot gas mixture is set such that the thickness at a position corresponding to the injection direction of the pilot injection is thicker than that at a position not corresponding to the injection direction of the pilot injection. This enables more accurate determination at to whether the main gas mixture (its forefront portion) has reached the stagnating pilot gas mixture (the region occupied thereby). Accordingly, the peripheral gas that surrounds the main gas mixture propagating within the combustion chamber can be properly switched, and thus, the temperature of the main gas mixture can be estimated more accurately.

In this case, preferably, the determination means is configured so as to reduce with time the degree of unevenness of the radial thickness of the pilot gas mixture stagnating in a generally annular configuration. Even when the radial thickness of the stagnating pilot gas mixture is uneven in the circumferential direction, the degree of unevenness can be considered to decrease with passage of time, because the stagnating pilot gas mixture disperses with time. Therefore, the above-described configuration enables more accurate determination at to whether the main gas mixture (its forefront portion) has reached the stagnating pilot gas mixture. As a result, the temperature of the main gas mixture can be estimated more accurately.

In the case where the radial thickness of the pilot gas mixture stagnating in an annular configuration is set unevenly, preferably, the gas mixture temperature estimation apparatus according to the present invention further comprises swirl flow velocity obtaining means for obtaining a value representing a velocity of a swirl flow produced by a swirl, wherein the determination means is configured to change the position corresponding to the injection direction of the pilot injection and the position not corresponding to the injection direction of the pilot injection, the positions being set with respect to the pilot gas mixture stagnating in a generally annular configuration, in accordance with the obtained value representing the swirl flow velocity. An example of the value representing the swirl flow velocity includes engine speed for the case where the swirl ratio is constant.

In general, in an internal combustion engine, in order to improve combustion efficiency, etc., a swirl flow velocity (flow velocity in the circumferential direction) generated by a swirl is imparted to the cylinder interior gas. Accordingly, the pilot gas mixture stagnating in a generally annular configuration can be considered to rotate in the circumferential direction at a speed corresponding to the swirl flow velocity. Therefore, in the case where the radial thickness of the stagnating pilot gas mixture changes in the circumferential direction, the position where the radial thickness is relatively large (i.e., the position corresponding to the injection direction of the pilot injection) and the position where the radial thickness is relatively small (i.e., the position not corresponding to the injection direction of the pilot injection) also move in the circumferential direction at a speed corresponding to the swirl flow velocity.

Accordingly, as described above, the determination apparatus is configured to change the position corresponding to the injection direction of the pilot injection and the position not corresponding to the injection direction of the pilot injection in accordance with the obtained value representing the swirl flow velocity. In this case, the radial thickness of the pilot gas mixture at the position where the main gas mixture (its forefront portion) reaches the stagnating pilot gas mixture can be calculated more accurately, and thus, the determination as to whether the main gas mixture has reached the stagnating pilot gas mixture can be performed more accurately. As a result, the temperature of the main gas mixture can be estimated more accurately.

BRIEF DESCRIPTION OF THE DRAWINGS

FIG. 1 a schematic diagram showing the overall configuration of a system in which an engine control apparatus including a gas mixture temperature estimation apparatus for an internal combustion engine according to a first embodiment of the present invention is applied to a four-cylinder internal combustion engine (diesel engine);

FIG. 2 is a diagram schematically showing a state in which gas is taken from an intake manifold to a certain cylinder and is then discharged to an exhaust manifold;

FIG. 3 is a diagram schematically showing a state in which fuel vapor disperses conically while mixing with cylinder interior gas to thereby produce a gas mixture;

FIG. 4A is a diagram schematically showing a state in which a pilot gas mixture disperses before pilot-injected fuel (i.e., a forefront portion of the pilot gas mixture) reaches the inner wall surface of a combustion chamber in the internal combustion engine shown in FIG. 1, and FIG. 4B is a diagram schematically showing a state in which the pilot gas mixture is evenly stagnating in an annular configuration in the vicinity of the side wall of the combustion chamber after the forefront portion of the pilot gas mixture has reached the inner wall surface of the combustion chamber;

FIG. 5 is a diagram showing a model regarding a pilot gas mixture stagnating in an annular configuration in the vicinity of the side wall of the combustion chamber, the model being used for obtaining the thickness of the pilot gas mixture stagnating in an annular configuration;

FIG. 6 is a perspective view showing the shape of the pilot gas mixture stagnating in the annular configuration according to the model of FIG. 5;

FIG. 7 is a flowchart showing a routine which the CPU shown in FIG. 1 executes so as to control fuel injection quantities, etc;

FIG. 8 is a table for determining instruction fuel injection quantities, to which the CPU shown in FIG. 1 refers during execution of the routine shown in FIG. 7;

FIG. 9 is a table for determining base fuel injection timings, to which the CPU shown in FIG. 1 refers during execution of the routine shown in FIG. 7;

FIG. 10 is a table for determining a base fuel injection pressure, to which the CPU shown in FIG. 1 refers during execution of the routine shown in FIG. 7;

FIG. 11 is a table for determining an injection timing correction value, to which the CPU shown in FIG. 1 refers during execution of the routine shown in FIG. 7;

FIG. 12 is a table for determining an injection pressure correction value, to which the CPU shown in FIG. 1 refers during execution of the routine shown in FIG. 7;

FIG. 13 is a flowchart showing a routine which the CPU shown in FIG. 1 executes so as to calculate various physical quantities at pilot injection start time;

FIG. 14 is a flowchart showing the first half of a routine which the CPU shown in FIG. 1 executes so as to calculate the temperature of a pilot gas mixture;

FIG. 15 is a flowchart showing the second half of the routine which the CPU shown in FIG. 1 executes so as to calculate the temperature of the pilot gas mixture;

FIG. 16 is a flowchart showing a routine which the CPU shown in FIG. 1 executes so as to calculate the thickness of the pilot gas mixture;

FIG. 17 is a flowchart showing a routine which the CPU shown in FIG. 1 executes so as to calculate various physical quantities at main injection start time;

FIG. 18 is a flowchart showing the first half of a routine which the CPU shown in FIG. 1 executes so as to calculate the temperature of a main gas mixture;

FIG. 19 is a flowchart showing the second half of the routine which the CPU shown in FIG. 1 executes so as to calculate the temperature of the main gas mixture;

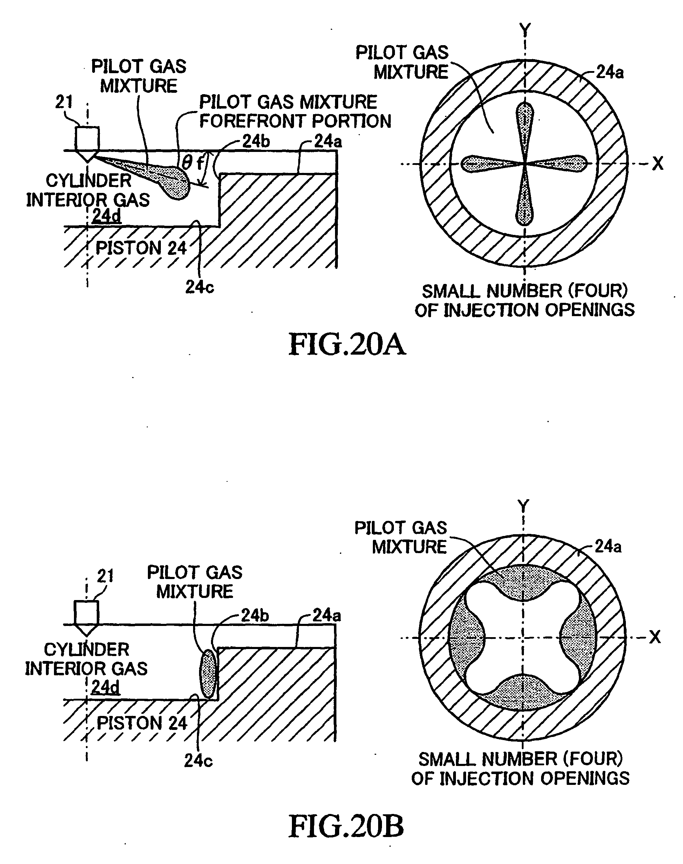

FIG. 20A is a diagram schematically showing a state in which a pilot gas mixture disperses before pilot-injected fuel (i.e., a forefront portion of the pilot gas mixture) reaches the inner wall surface of the combustion chamber in an internal combustion engine to which a gas mixture temperature estimation apparatus according to a second embodiment of the present invention is applied, and FIG. 20B is a diagram schematically showing a state in which the pilot gas mixture is unevenly stagnating in an annular configuration in the vicinity of the side wall of the combustion chamber after the forefront portion of the pilot gas mixture has reached the inner wall surface of the combustion chamber;

FIG. 21 is a diagram showing a model regarding a pilot gas mixture unevenly stagnating in an annular configuration in the vicinity of the side wall of the combustion chamber, the model being used for obtaining the thickness of the pilot gas mixture unevenly stagnating in an annular configuration;

FIG. 22 is a flowchart showing a routine which a CPU of the gas mixture temperature estimation apparatus according to the second embodiment executes so as to calculate an angle of rotation of the pilot gas mixture caused by a swirl; and

FIG. 23 is a flowchart showing a routine which the CPU of the gas mixture temperature estimation apparatus according to the second embodiment executes so as to correct the thickness of the pilot gas mixture.

## DESCRIPTION OF THE PREFERRED EMBODIMENTS

With reference to the drawings, there will now be described embodiments of a control apparatus of an internal combustion engine (diesel engine) which includes a gas mixture temperature estimation apparatus for an internal combustion engine according to the present invention.

First Embodiment:

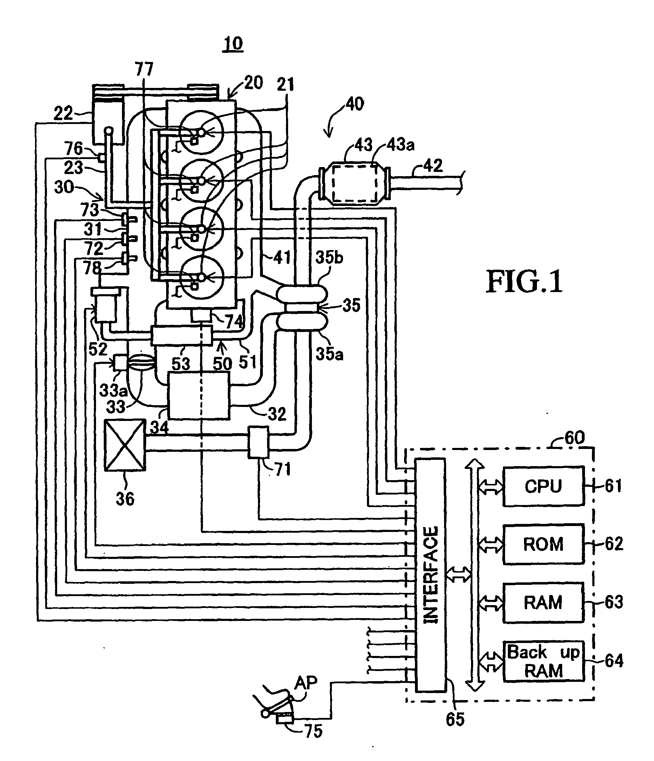

FIG. 1 schematically shows the entire configuration of a system in which a control apparatus including a gas mixture temperature estimation apparatus according to a first embodiment of the present invention is applied to a four-cylinder internal combustion engine (diesel engine) 10. This system comprises an engine main body 20 including a fuel supply system; an intake system 30 for introducing gas to combustion chambers (cylinder interiors) of individual cylinders of the engine main body 20; an exhaust system 40 for discharging exhaust gas from the engine main body 20; an EGR apparatus 50 for performing exhaust circulation; and an electronic control apparatus 60.

Fuel injection valves (injection valves, injectors) 21 are disposed above the individual cylinders of the engine main body 20. The fuel injection valves 21 are connected via a fuel line 23 to a fuel injection pump 22 connected to an unillustrated fuel tank. The fuel injection pump 22 is electrically connected to the electronic control apparatus 60. In accordance with a drive signal from the electronic control apparatus 60 (an instruction signal corresponding to an instruction final fuel injection pressure Pcrfin to be described later), the fuel injection pump 22 pressurizes fuel in such a manner that the actual injection pressure (discharge pressure) of fuel becomes equal to the instruction final fuel injection pressure Pcrfin.

Thus, fuel pressurized to the instruction final fuel injection pressure Pcrfin is supplied from the fuel injection pump 22 to the fuel injection valves 21. Moreover, the fuel injection valves 21 are electrically connected to the electronic control apparatus 60. In accordance with a drive signal (an instruction signal corresponding to an instruction pilot fuel injection quantity qfinp or an instruction main fuel injection quantity qfinm) from the electronic control apparatus 60, each of the fuel injection valves 21 opens for a predetermined period of time so as to inject, directly to the combustion chamber of the corresponding cylinder, the fuel pressurized to the instruction final fuel injection pressure Pcrfin such that fuel of the instruction pilot fuel injection quantity qfinp is injected by means of pilot injection, and then fuel of the instruction main fuel injection quantity qfinm is injected by means of main injection.

The intake system 30 includes an intake manifold 31, which is connected to the respective combustion chambers of the individual cylinders of the engine main body 20; an intake pipe 32, which is connected to an upstream-side branching portion of the intake manifold 31 and constitutes an intake passage in cooperation with the intake manifold 31; a throttle valve 33, which is rotatably held within the intake pipe 32; a throttle valve actuator 33a for rotating the throttle valve 33 in accordance with a drive signal from the electronic control apparatus 60; an intercooler 34, which is interposed in the intake pipe 32 to be located on the upstream side of the throttle valve 33; a compressor 35a of a turbocharger 35, which is interposed in the intake pipe 32 to be located on the upstream side of the intercooler 34; and an air cleaner 36, which is disposed at a distal end portion of the intake pipe 32.

The exhaust system 40 includes an exhaust manifold 41, which is connected to the individual cylinders of the engine main body 20; an exhaust pipe 42, which is connected to a downstream-side merging portion of the exhaust manifold 41; a turbine 35b of the turbocharger 35 interposed in the exhaust pipe 42; and a diesel particulate filter (hereinafter referred to as "DPNR") 43, which is interposed in the exhaust pipe 42. The exhaust manifold 41 and the exhaust pipe 42 constitute an exhaust passage.

The DPNR 43 is a filter unit which accommodates a filter 43a formed of a porous material such as cordierite and which collects, by means of a porous surface, the particulate matter contained in exhaust gas passing through the filter. In the DPNR 43, at least one metal element selected from alkaline metals such as potassium K, sodium Na, lithium Li, and cesium Cs; alkaline-earth metals such as barium Ba and calcium Ca; and rare-earth metals such as lanthanum La and yttrium Y is carried, together with platinum, on alumina serving as a carrier. Thus, the DPNR 43 also serves as a storage-reduction-type $NO_x$ catalyst unit which, after absorption of $NO_x$, releases the absorbed $NO_x$ and reduces it.

The EGR apparatus 50 includes an exhaust circulation pipe 51, which forms a passage (EGR passage) for circulation of exhaust gas; an EGR control valve 52, which is interposed in the exhaust circulation pipe 51; and an EGR cooler 53. The exhaust circulation pipe 51 establishes communication between an exhaust passage (the exhaust manifold 41) located on the upstream side of the turbine 35b, and an intake passage (the intake manifold 31) located on the downstream side of the throttle valve 33. The EGR control valve 52 responds to a drive signal from the electronic control apparatus 60 so as to change the quantity of exhaust gas to be circulated (exhaust-gas circulation quantity, EGR-gas flow rate).

The electronic control apparatus 60 is a microcomputer which includes a CPU 61, ROM 62, RAM 63, backup RAM 64, an interface 65, etc., which are connected to one another by means of a bus. The ROM 62 stores a program to be executed by the CPU 61, tables (lookup tables, maps), constants, etc. The RAM 63 allows the CPU 61 to temporarily store data. The backup RAM 64 stores data in a state in which the power supply is on, and holds the stored data even after the power supply is shut off. The interface 65 contains A/D converters.

The interface 65 is connected to a hot-wire-type air flow meter 71, which serves as air flow rate (new-air flow rate) measurement means, and is disposed in the intake pipe 32; an intake-gas temperature sensor 72, which is provided in the intake passage to be located downstream of the throttle valve 33 and downstream of a point where the exhaust circulation pipe 51 is connected to the intake passage; an intake pipe pressure sensor 73, which is provided in the intake passage to be located downstream of the throttle valve 33 and downstream of a point where the exhaust circulation pipe 51 is connected to the intake passage; a crank position sensor 74; an accelerator opening sensor 75; a fuel temperature sensor 76 provided in the fuel pipe 23 in the vicinity of the discharge port of the fuel injection pump 22; a cylinder interior pressure sensor 77 disposed for each cylinder; and an intake-gas oxygen concentration sensor 78 provided in the intake passage to be located downstream of the throttle valve 33 and downstream of the point where the exhaust circulation pipe 51 is connected to the intake passage. The interface 65 receives respective signals from these sensors, and supplies the received signals to the CPU 61. Further, the interface 65 is connected to the fuel injection valves 21, the fuel injection pump 22, the throttle valve actuator 33a, and the EGR control valve 52; and outputs corresponding drive signals to these components in accordance with instructions from the CPU 61.

The hot-wire-type air flow meter 71 measures the mass flow rate of intake air passing through the intake passage (intake air quantity per unit time, new air quantity per unit time), and generates a signal indicating the mass flow rate Ga (air flow rate Ga). The intake-gas temperature sensor 72 measures the temperature of gas that is taken into each cylinder (i.e., each combustion chamber or cylinder interior) of the engine 10 (i.e., intake-gas temperature), and generates a signal representing the intake-gas temperature Tb. The intake pipe pressure sensor 73 measures the pressure of gas that is taken into each cylinder of the engine 10 (i.e., intake pipe pressure), and generates a signal representing the intake pipe pressure Pb.

The crank position sensor 74 detects the absolute crank angle of each cylinder, and generates a signal representing the crank angle CA and engine speed NE; i.e., rotational speed of the engine 10. The accelerator opening sensor 75 detects an amount by which an accelerator pedal AP is operated, and generates a signal representing the accelerator pedal operated amount Accp (hereinafter referred to as the "accelerator opening Accp"). The fuel temperature sensor 76 detects temperature of fuel flowing through the fuel line 23, and generates a signal representing fuel temperature Tcr. The cylinder interior pressure sensor 77 detects pressure of a gas within the combustion chamber (i.e., pressure of the cylinder interior gas), and generates a signal representing the cylinder interior gas pressure Pa. As will be described later, the cylinder interior pressure sensor 77 is used only for detection of ignition timing of the pilot gas mixture. The intake-gas oxygen concentration sensor 78 detects the oxygen concentration of intake gas taken into the combustion chamber, and outputs a signal representing intake-gas oxygen concentration R02in.

### Outline of Method for Estimating Gas Mixture Temperature

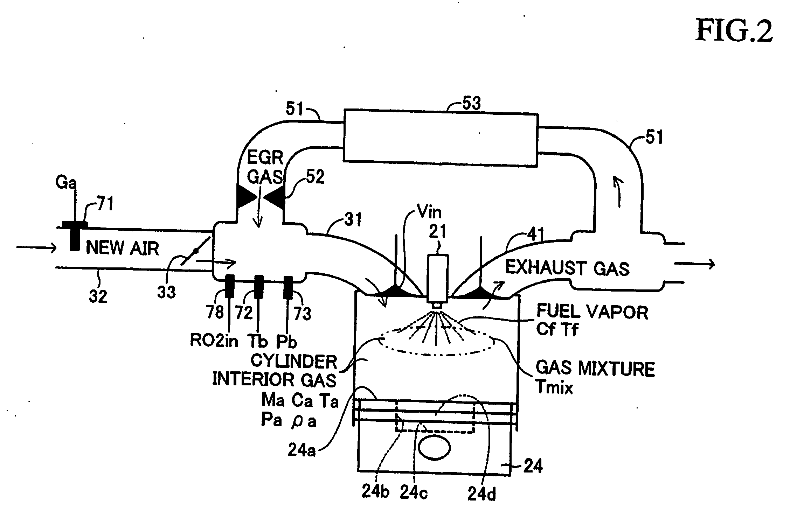

Next, there will be described a method for estimating gas mixture temperature performed by the control apparatus of the internal combustion engine having the above-described configuration (hereinafter may be referred to as the "present apparatus"). FIG. 2 is a diagram schematically showing a state in which gas is taken from the intake manifold 31 into a certain cylinder (combustion chamber) and is then discharged to the exhaust manifold 41.

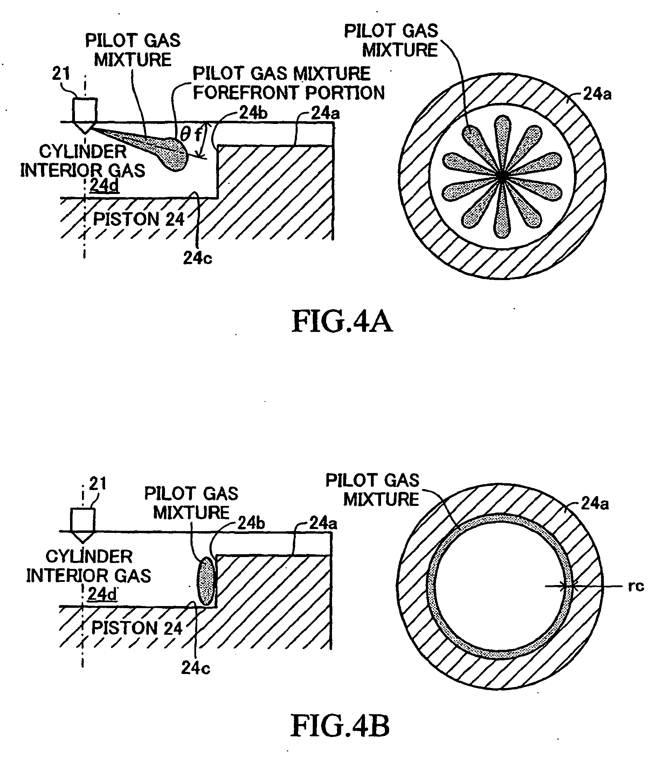

As shown In FIG. 2, the combustion chamber is defined by a cylinder, head, a cylindrical inner wall surface of the cylinder, and a piston 24. A cylindrical depression (hereinafter referred to as a "cavity 24d") is formed on the top surface 24a of the piston 24 concentrically with the center axis thereof. The cavity 24d has a side surface 24b and a bottom surface 24c. The fuel injection valve 21 is fixedly disposed on the cylinder head in such a manner that the center axis of the fuel injection valve 21 coincides with the center axis of the cylinder, and 10 injection openings are provided at the tip end of the fuel injection valve 21 so as to cause the injected fuel (i.e., gas mixture) to disperse toward the side wall 24b of the cavity 24d along ten directions which are disposed at uniform angular intervals and extend along an imaginary cone centered at the center axis of the cylinder, as shown in FIG. 4A to be described later.

As shown in FIG. 2, the gas taken into the combustion chamber (accordingly, cylinder interior gas) includes new air taken from the tip end of the intake pipe 32 via the throttle valve 33, and EGR gas taken from the exhaust circulation pipe 51 via the EGR control valve 52. The ratio (i.e., EGR ratio) of the quantity (mass) of the taken EGR gas to the sum of the quantity (mass) of the taken new air and the quantity (mass) of the taken EGR gas changes depending on the opening of the throttle valve 33 and the opening of the EGR control valve 52, which are properly controlled by the electronic control apparatus 60 (CPU 61) in accordance with the operating condition.

During an intake stroke, such new air and EGR gas are taken into the cylinder via an opened intake valve Vin as the piston moves downward, and the thus-produced gas mixture serves as cylinder interior gas. The cylinder interior gas is confined within the combustion chamber when the intake valve Vin closes upon the piston having reached bottom dead center, and is then compressed in a subsequent compression stroke as the piston moves upward. When a predetermined fuel injection start timing (specifically, pilot injection start timing or main injection start timing) comes, the present apparatus opens the corresponding fuel injection valve 21 so as to inject fuel directly into the combustion chamber. As a result, the (liquid) fuel injected from the ten injection openings immediately becomes fuel vapor, because of heat received from the cylinder interior gas having become hot due to compression. With elapse of time, the fuel vapor disperses conically, while mixing with a peripheral gas surrounding the fuel vapor (here, cylinder interior gas) to produce a gas mixture. Hereinafter, a description will first be provided without distinguishing the pilot gas mixture and the main gas mixture.

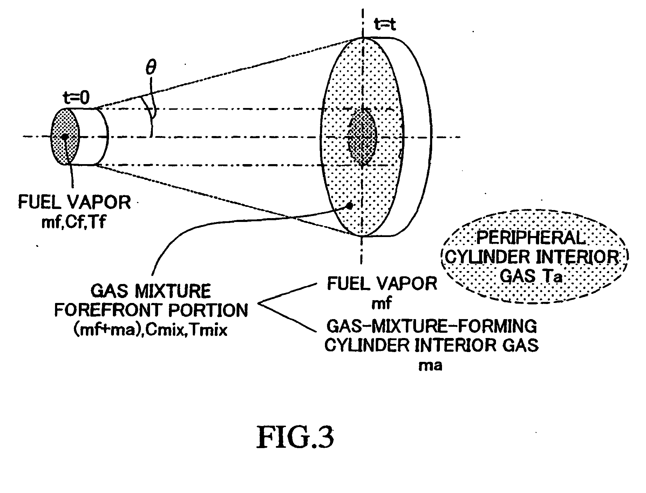

FIG. 3 is a diagram schematically showing a state in which fuel vapor produced upon injection of fuel from a certain injection opening disperses conically while mixing with cylinder interior gas to produce a gas mixture. Now, of fuel continuously injected for the predetermined period of time, fuel (fuel vapor) which is present in a forefront portion and has a mass of mf will be considered. After being injected at a fuel injection start timing (i.e., post injection time t = 0), the fuel vapor whose mass is mf conically disperses at a spray angle θ (see FIG. 3). The fuel vapor is assumed to mix with a cylinder interior gas (hereinafter may be referred to as "gas-mixture-forming cylinder interior gas") which is a portion of the above-mentioned peripheral gas (here, the cylinder interior gas) and has a mass of ma, at arbitrary post injection time t, to thereby produce a gas mixture forefront portion which has a mass of (mf + ma). The present apparatus estimates temperature of the gas mixture forefront portion as measured at arbitrary post injection time t (pilot gas mixture temperature Tmixp and main gas mixture temperature Tmixm, which will be described later) for the pilot gas mixture and the main gas mixture individually. First, there will be described a method for obtaining the mass ma of the gas-mixture-forming cylinder interior gas which mixes with the fuel vapor having the mass mf (the ratio (mass ratio) of the mass ma of the gas-mixture-forming cylinder interior gas to the mass mf of the fuel vapor) at arbitrary post injection time t. The mass ma (or the ratio thereof) is necessary for estimation of the temperature of the gas mixture forefront portion.

<Obtainment of Mass ma of Gas-mixture-forming Cylinder Interior Gas>

In order to obtain the mass ma of the gas-mixture-forming cylinder interior gas as measured at post injection time t, the ratio of the mass ma of the gas-mixture-forming cylinder interior gas to the mass mf of the fuel vapor (i.e., ma/mf) at post injection time t is obtained. Now, an excess air factor λ of the gas mixture forefront portion at post injection time t is defined by the following Equation (1). In Equation (1), stoich represents a stoichiometric air-fuel ratio (e.g., 14.6).

$$\lambda = (ma/mf)/stoich \qquad (1)$$

The excess air factor λ defined as described above can be obtained as a function of post injection time t on the basis of, for example, the following Equation (2) and Equation (3), which are empirical formulas introduced in "Study on Injected Fuel Travel Distance in Diesel Engine," Yutaro WAGURI, Masaru FUJII, Tatsuo AMIYA, and Reijiro TSUNEYA, the Transactions of the Japanese Society of Mechanical Engineers, p820, 25-156 (1959) (hereinafter referred to as Non-Patent Document 1).

$$\lambda = \int \frac{d\lambda}{dt}\, dt \qquad \cdots (2)$$

$$\frac{d\lambda}{dt} = \frac{2^{0.25}}{c^{0.25} \cdot d^{0.5} \cdot \rho_f} \cdot \frac{1}{L} \cdot \tan^{0.5}\theta \cdot \rho_a^{\,0.25} \cdot \Delta P^{0.25} \cdot \frac{1}{t^{0.5}} \qquad \cdots (3)$$

In Equation (3), t represents the above-mentioned post injection time, and $d\lambda/dt$ represents fuel dilution ratio, which is a function of post injection time t. Further, c represents a contraction coefficient, d represents the diameter of the injection openings of the fuel injection valves 21, pf represents the density of (liquid) fuel, and L represents a theoretical dilution gas quantity, all of which are constants.

In Equation (3), $\Delta P$ represents effective injection pressure, which is a value obtained through subtraction, from the above-mentioned final fuel injection pressure Pcrfin, of cylinder interior gas pressure Pa0 at the injection start timing (i.e., post injection time t = 0). The cylinder interior gas pressure Pa0 can be obtained in accordance with the following Equation (4) under the assumption that the state of the cylinder interior gas changes adiabatically in the compression stroke (and expansion stroke) after the piston has reached bottom dead center (hereinafter referred to as "ATDC - 180°", the point in time at which the cylinder interior gas has been confined).

$$Pa0 = Pbottom \cdot (Vbottom/Va0)^{\kappa} \qquad (4)$$

In Equation (4), Pbottom represents cylinder interior gas pressure at ATDC - 180°. Since the cylinder interior gas pressure is considered to be substantially equal to the intake pipe pressure Pb at ATDC - 180°, the value of Pbottom can obtained from the intake pipe pressure Pb detected by means of the intake pipe pressure sensor 73 at ATDC - 180°. Vbottom represents cylinder interior volume at ATDC -180°. Va0 represents cylinder interior volume corresponding to a crank angle CA at post injection time t = 0. Since cylinder interior volume Va can be obtained as a function Va(CA) of the crank angle CA on the basis of the design specifications of the engine 10, the values of Vbottom and Va0 can be obtained as well. $\kappa$ represents the specific heat ratio of the cylinder interior gas.

In Equation (3), $\theta$ represents the spray angle shown in FIG. 3. Since the spray angle $\theta$ is considered to change in accordance with the above-mentioned effective injection pressure $\Delta P$ and density $\rho a0$ of the cylinder interior gas at the injection start timing (i.e., post injection time t = 0), the spray angle $\theta$ can be obtained on the basis of a table Map$\theta$, which defines the relation between cylinder interior gas density $\rho a0$, effective injection pressure $\Delta P$, and spray angle $\theta$. The cylinder interior gas density $\rho a0$ can be obtained through division of the total mass Ma of the cylinder interior gas by the above-mentioned cylinder interior volume Va0 at post injection time t = 0. The total mass Ma of the cylinder interior gas can be obtained in accordance with the following Equation (5), which is based on the state equation of gas at ATDC - 180°. In Equation (5), Tbottom represents cylinder interior gas temperature at ATDC - 180°. Since the cylinder interior gas temperature is considered to be substantially equal to the intake-gas temperature Tb at ATDC - 180°, the value of Tbottom can be obtained from the intake-gas temperature Tb detected by means of the intake-gas temperature sensor 72 at ATDC - 180°. Ra represents the gas constant of the cylinder interior gas.

$$Ma = Pbottom \cdot Vbottom/(Ra \cdot Tbottom) \qquad (5)$$

In Equation (3), pa represents density of the cylinder interior gas at post injection time t and can be obtained as a function of post injection time t through division of the total mass Ma of the cylinder interior gas by the above-mentioned cylinder interior volume Va(CA) at post injection time t.

As described above, the effective injection pressure $\Delta P$ and the spray angle $\theta$ are first obtained at post injection time t = 0; and subsequently, values of the fuel dilution ratio $d\lambda/dt$ are successively obtained in accordance with Equation (3) and on the basis of post injection time t and cylinder interior gas density $\rho a$, which is a function of post injection time t. The successively obtained values of fuel dilution ratio $d\lambda/dt$ are integrated with respect to time in accordance with Equation (2), whereby excess air factor $\lambda$ at post injection time t can be obtained. Upon obtainment of excess air factor $\lambda$ at post injection time t, mass ratio ma/mf at post injection time t can be obtained from Equation (1).

Since the fuel dilution ratio $d\lambda/dt$ obtained from Equation (3) always assumes a positive value, the excess air factor $\lambda$ obtained from Equation (2) increases with the post injection time t. Therefore, as can be understood from Equation (1), the mass ratio (ma/mf) increases with the post injection time t. This coincides with the fact that as vapor of the injected fuel (its forefront portion) disperses conically, an increasing quantity of the cylinder interior gas (i.e., gas-mixture-forming cylinder interior gas) is mixed with the fuel vapor at the gas mixture forefront portion.

<Obtainment of Gas Mixture Temperature Tmix>

Upon obtainment of the mass ratio ma/mf at post injection time t, the gas mixture temperature Tmix (= Tmix (k)) of the gas mixture forefront portion for the case where the peripheral gas of the gas mixture forefront portion is always the cylinder interior gas can be obtained at intervals corresponding to the computation cycle of the CPU 61 as described below. This gas mixture temperature Tmix(k) represents the temperature of the gas mixture forefront portion (adiabatic gas mixture temperature) calculated under the assumption that heat exchange with the outside (i.e., a cylinder interior gas which exists around the gas mixture without mixing with the fuel (hereinafter referred to as "peripheral cylinder interior gas")) does not occur in the course of mixture of the fuel vapor having a mass of mf and constituting the gas mixture forefront portion and the mixing-gas-forming cylinder interior gas having a mass of ma. Notably, the suffix (k) appended to Tmix represents that the value of Tmix is a value calculated in the current computation cycle (current value). In the following description, the same rule applies to variables other than Tmix; i.e., suffix (k) represents that the value of a variable to which the suffix (k) is appended is a current value, and suffix (k-1) represents that the value of a variable to which the suffix (k-1) is appended is a value calculated in the previous computation cycle (previous value).

Now, a gas mixture in the previous computation cycle, which has a mass ratio (previous value) (ma/mf)(k-1), a mass (mf+ma), and a gas mixture temperature (previous value) Tmix(k-1), is considered. The quantity of heat carried by the gas mixture can be represented by "(mf + ma)·Cmix(k.1)·Tmix(k-1)" by use of the specific heat Cmix (k-1) of the gas mixture and the gas mixture temperature Tmix (k-1). The specific heat Cmix(k-1) of the gas mixture can be represented by Equation (6) shown below. In Equation (6), Cf represents the specific heat of fuel vapor, and Ca represents the specific heat of the cylinder interior gas.

$$Cmix(k-1) = (Cf + (ma/mf)(k-1)\cdot Ca)/(1 + (ma/mf)(k-1)) \quad (6)$$

Meanwhile, when the mass of a gas-mixture-forming cylinder interior gas which is newly added as a gas mixture during a period between the previous computation time and the current computation time is represented by $\Delta ma$, the quantity of heat carried by the gas-mixture-forming cylinder interior gas of the mass $\Delta ma$ can be represented by "$\Delta ma\cdot Ca\cdot Ta$," where Ca represents the specific heat of the cylinder interior gas, and Ta represents the temperature of the cylinder interior gas (at the current computation time). The temperature Ta of the cylinder interior gas (i.e., the temperatures of the mixing-gas-forming cylinder interior gas and the peripheral cylinder interior gas) can be obtained in accordance with the following Equation (7) under the assumption that the state of the cylinder interior gas changes adiabatically in the compression stroke (and the expansion stroke).

$$Ta = Tbottom\cdot(Vbottom/Va(CA))^{\kappa-1} \quad (7)$$

Under the assumption that the entire heat quantity discharged from the mixing-gas-forming cylinder interior gas (mass: $\Delta ma$) when the temperature Ta of the mixing-gas-forming cylinder interior gas decreases to the gas mixture temperature (current value) Tmix(k) is absorbed by the gas mixture (mass: mf + ma) so as to increase the gas mixture temperature (previous value) Tmix(k-1) to the gas mixture temperature (current value) Tmix(k), the following Equation (8) stands. When Equation (8) is solved for the gas mixture temperature (current value) Tmix(k), and rearranged, the following Equation (9) is obtained.

$$\Delta ma \cdot Ca \cdot (Ta - Tmix(k)) =$$

$$(mf + ma) \cdot Cmix(k-1) \cdot (Tmix(k) - Tmix(k-1)) \qquad (8)$$

$$Tmix(k) =$$

$$(Cmix(k-1) \cdot Tmix(k-1) + A \cdot Ca \cdot Ta)/(Cmix(k-1) + A \cdot Ca) \qquad (9)$$

In Equation (9), A represents the value of $\Delta ma/(mf + ma)$. Here, since $\Delta ma/mf = (ma/mf)(k) - (ma/mf)(k-1)$, the following Equation (10) can be obtained for the value A. Accordingly, the value A can be obtained in accordance with Equation (10) by use of the mass ratio previous value $(ma/mf)(k-1)$ and the mass ratio current value $(ma/mf)(k)$.

$$A = ((ma/mf)(k) - (ma/mf)(k-1))/(1 + (ma/mf)(k-1)) \qquad (10)$$

Accordingly, when the initial values of the gas mixture temperature Tmix, the gas mixture specific heat Cmix, and the mass ratio ma/mf (i.e., the values at a point of post injection time $t = 0$) are given, for the case where the peripheral gas of the gas mixture forefront portion is always the cylinder interior gas, the gas mixture temperature Tmix(k) (adiabatic gas mixture temperature) after the point of the post injection time $t = 0$ can be successively obtained in accordance with the above-described Equation (9) at the computation intervals. Notably, the initial values of the gas mixture temperature Tmix, the gas mixture specific heat Cmix, and the mass ratio ma/mf are the temperature Tf of fuel vapor, the specific heat Cf of fuel vapor, and zero, respectively.

The temperature Tf of the fuel vapor can be expressed by the following Equation (11) in consideration of latent heat Qvapor per unit mass generated when the liquid fuel changes to fuel vapor immediately after injection. In Expression (11), Tcr represents the temperature of liquid fuel detected by means of the fuel temperature sensor 76 at post injection time $t = 0$. $\alpha cr$ is a correction coefficient for taking into consideration a heat loss produced when fuel passes through the fuel pipe 23 from the vicinity of the discharge port of the fuel injection pump 22 to the fuel injection valves 21.

$$Tf = \alpha cr \cdot Tcr - Qvapor/Cf \qquad (11)$$

<Obtainment of Pilot Gas Mixture Temperature Tmixp>

Next, a method for obtaining the pilot gas mixture temperature Tmixp will be described. In order to facilitate the description, "p" is suffixed to variables related to the pilot gas mixture, and "m" is suffixed to variables related to the main gas mixture, among the above-described various variables (or newly introduced variables).

In a period in which the pilot gas mixture (its forefront portion), which is a gas mixture produced by means of the pilot injection, proceeds within the combustion chamber, the peripheral gas that surrounds the pilot gas mixture forefront portion is always the above-mentioned cylinder interior gas. Accordingly, the pilot gas mixture temperature Tmixp(k) after the point of the post pilot injection time $tp = 0$ can be successively obtained, at the computation intervals of the CPU 61, in accordance with an equation which is used in relation to the pilot gas mixture, corresponds to the above-described Equation (9), and uses the temperature Ta and specific heat Ca of the cylinder interior gas, which serves as the peripheral gas.

Further, when the pilot gas mixture is ignited, the temperature of the pilot gas mixture increases instantaneously because of combustion. Since this temperature increase changes depending on the excess air factor $\lambda p$ of the pilot gas mixture at the time of ignition which factor is repeatedly calculated in accordance with an equation corresponding to the above-described Equation (2) and related to the pilot gas mixture, the temperature increase can be represented by a function $Tburn(\lambda p)$ whose argument is the excess air factor $\lambda p$.

In view of the above, basically irrespective of whether the present time is before or after the ignition of the pilot gas mixture, the present apparatus repeatedly obtains, at the computation intervals of the CPU 61, the pilot gas mixture temperature Tmixp(k) after the point of the post pilot injection time $tp = 0$ by making use of an equation related to he pilot gas mixture and corresponding to the above-described Equation (9). The present apparatus detects the time of ignition of the pilot gas mixture on the basis of a change (sharp increase) in the cylinder interior gas pressure Pa detected by means of the cylinder interior pressure sensor 77. When the time of ignition is detected, the present apparatus corrects the pilot gas mixture temperature Tmixp(k) only one time through addition of a value Tburn($\lambda$p), which is determined on the basis of the excess air factor $\lambda$p at the ignition time, to the pilot gas mixture temperature Tmixp(k), which is calculated at the ignition time (or immediately after the ignition time). The above is the outline of the method for estimating the pilot gas mixture temperature Tmixp(k).

<Treatment after Pilot Gas Mixture Forefront Portion Collides against Inner Wall Surface of Combustion Chamber>

As described previously, the fuel pilot-injected from the fuel injection valve 21 (accordingly, the pilot gas mixture forefront portion) moves toward the side surface 24b of the cavity 24d as shown in FIG. 4A. When a predetermined time elapses after the start of the injection, the pilot gas mixture forefront portion reaches the side surface 24b (the inner wall surface of the combustion chamber).

After the pilot gas mixture forefront portion has reached the side surface 24b, the pilot gas mixture (the entirety thereof) is considered to stagnate in an annular configuration in the vicinity of the side surface 24b (the side wall of the combustion chamber) as shown in FIG. 4B, because the pilot gas mixture loses momentum in the radial direction through collision against the side surface 24b. The stagnating pilot gas mixture is considered to have an even radial thickness (pilot gas mixture thickness rc, which will be described later), because the number of injection openings of the fuel injection valve 21 is relatively large (10 openings) as described above, and the above-described unevenness of the radial thickness can be ignored.

In order to specify the point in time when the pilot gas mixture forefront portion reaches the side surface 24b, the travel distance of the pilot mixture forefront portion after the start of the pilot injection as measured from the injection opening of the fuel injection valve 21 and the distance between the injection opening and the side surface 24b of the cavity 24d. Methods for obtaining these values will now be described successively.

In general, the travel distance over which the gas mixture forefront portion travels from the injection opening of the fuel injection valve 21 after the injection start timing (hereinafter referred to as "gas mixture travel distance X") can be obtained as a function of post injection time t on the basis of, for example, the following Equation (12) and Equation (13), which are experimental formulas introduced in the above-mentioned Non-Patent Document 1. In Equation (13), dX/dt represents gas mixture moving speed, which is a function of post injection time t. Notably, various values shown in the right side of Equation (13) are identical with those shown in the right side of Equation (3).

$$ X = \int \frac{dX}{dt}\, dt \qquad \cdots (12) $$

$$ \frac{dX}{dt} = \frac{1}{2} \cdot \left( \frac{2c \cdot \Delta P}{\rho_a} \right)^{0.25} \cdot \left( \frac{d}{\tan\theta} \right)^{0.5} \cdot \frac{1}{t^{0.5}} \qquad \cdots (13) $$

That is, values of the gas mixture moving speed dX/dt are successively obtained in accordance with Equation (13) and on the basis of post injection time t and cylinder interior gas density $\rho$a, which is a function of post injection time t. The successively obtained values of the gas mixture moving speed dX/dt are integrated with respect to time in accordance with Equation (12), whereby the gas mixture travel distance X at post injection time t can be obtained. Accordingly, the travel distance Xp over which the pilot gas mixture forefront portion travels from the injection opening of the fuel injection valve 21 can be obtained as a function of post pilot injection time tp in accordance with an equation which is related to the pilot gas mixture and corresponds to the above-described Equation (12).

The distance from the injection opening of the fuel injection valve 21 to the side surface 24b of the cavity 24d (hereinafter referred to as "combustion chamber inner wall surface distance Xwall") can be represented by the following Equation (14) by use of the radius a of the cavity 24d and the injection angle $\theta$f (see FIG. 4A).

$$ Xwall = a/\cos(\theta f) \qquad\qquad (14) $$

The present apparatus repeatedly calculates the pilot gas mixture travel distance Xp from an equation corresponding to the above-described Equation (12) after the start of the pilot injection, and when the condition "the pilot gas mixture travel distance $X\rho \geq$ the combustion chamber inner wall surface distance Xwall° is satisfied, the present apparatus determines that the pilot gas mixture forefront portion has collided against the inner wall surface of the combustion chamber. After that point in time, the present apparatus assumes that the pilot gas mixture (its entirety) is stagnating in an annular configuration in the vicinity of the side surface 24b of the cavity 24d (the side wall of the combustion chamber) and has an even radial distance (i.e., pilot gas mixture thickness rc).

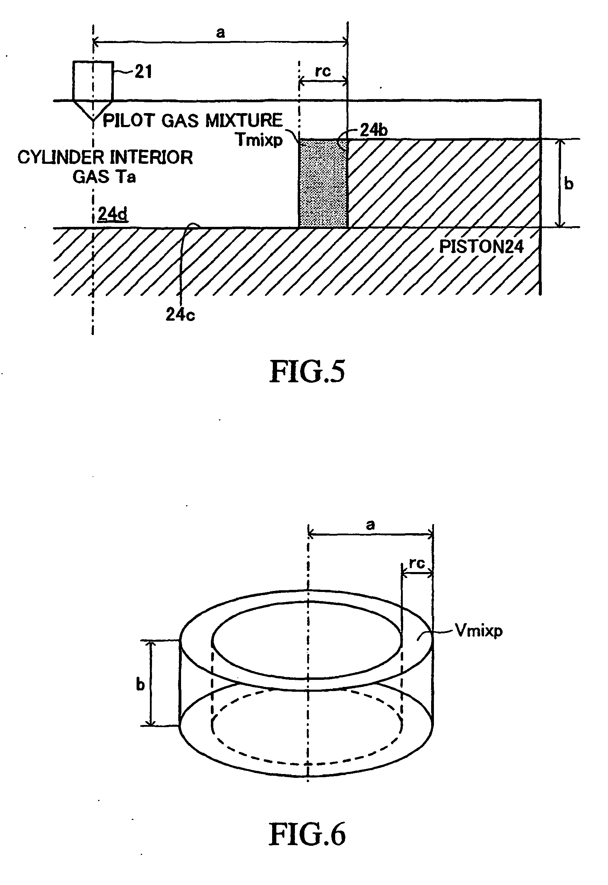

Next, a method for obtaining the pilot gas mixture thickness rc will be described. In the present example, a model as shown in FIG. 5 will be considered for the pilot gas mixture stagnating in an annular configuration. In this model, the stagnating pilot gas mixture is assumed to form a ring shape which has a rectangular cross section and has a thickness (pilot gas mixture thickness) rc and a height equal to the cavity depth b, as shown in FIG. 6, and to be in contact with the side surface 24b and the bottom surface 24c of the cavity 24d.

As is easily understood from FIG. 6, the volume Vmixp of the (entire) pilot gas mixture stagnating in an annular configuration must be obtained in order to obtain the pilot gas mixture thickness rc. The fuel concentration Rfuelp in the pilot gas mixture stagnating in an annular configuration must be obtained in order to obtain the volume Vmixp. The pilot gas mixture fuel concentration Rfuelp can be obtained in accordance with the following Equation (15).

$$\text{Rfuelp} = [1+\lambda p \cdot (m+n/4) \cdot \{1+(1-RO2mix)/RO2mix\}]^{-1} \qquad (15)$$

In Equation (15), $\lambda p$ represents the excess air factor related to the pilot gas mixture. As described above, the excess air factor $\lambda p$ is repeatedly calculated in accordance with the above-described Equation (2) and related to the pilot gas mixture. m represents the average number of carbon atoms of the fuel (light oil), and n represents the average number of hydrogen atoms of the fuel. RO2mix represents the oxygen concentration of the pilot gas mixture. Since the pilot gas mixture oxygen concentration RO2mix can be considered to be substantially equal to the intake-gas oxygen concentration RO2in at the compression bottom dead center, the value of RO2mix can be obtained as an intake-gas oxygen concentration RO2inbottom detected by means of the intake-gas oxygen concentration sensor 78 at ATDC-180°.

Once the pilot gas mixture fuel concentration Rfuelp is obtained, the quantity (mass) u of the pilot gas mixture stagnating in an annular configuration can be obtained in accordance with the following Equation (16). In Equation (16), qfinp is the above-described (instruction) pilot fuel injection quantity (mass).

$$u = \text{qfinp/Rfuelp} \qquad (16)$$

Thus, the above-described pilot gas mixture volume Vmixp can be obtained in accordance with the following Equation (17) through application of the gas state equation to the pilot gas mixture stagnating in an annular configuration. In Equation (17), R represents the gas constant related to the pilot gas mixture, and Tmixp(k) represents the current value of the above-described pilot gas mixture temperature. Pa represents the cylinder interior gas pressure at the present point in time, which can be obtained in accordance with an equation similar to the above-described Equation (4) and the above-described cylinder interior volume Va(CA) at the present point in time.

$$\text{Vmixp} = u \cdot R \cdot \text{Tmixp(k)/Pa} \qquad (17)$$

Meanwhile, the pilot gas mixture volume Vmixp can be represented by the following Equation (18) by use of the pilot gas mixture thickness rc, and the following Equation (19) can be obtained by solving Equation (18) with respect to rc. Therefore, once the pilot gas mixture volume Vmixp is obtained in accordance with Equation (17), the pilot gas mixture thickness rc can be obtained in accordance with Equation (19). In this manner, the pilot gas mixture thickness rc changes moment to moment in accordance with the pilot gas mixture volume Vmixp.

$$Vmixp = \pi a^2 \cdot b - \pi(a - rc)^2 \cdot b \qquad (18)$$

$$rc = a - \{\pi b \cdot (\pi a^2 \cdot b - Vmixp)\}^{1/2} \qquad (19)$$

<Obtainment of Main Gas Mixture Temperature Tmixm>

Next, a method for obtaining the main gas mixture temperature Tmixm will be described. In a period in which the main gas mixture (its forefront portion), which is a gas mixture produced by means of the main injection, proceeds within the combustion chamber, the pilot gas mixture is stagnating in an annular configuration as described above. Accordingly, until the main gas mixture forefront portion reaches the stagnating pilot gas mixture, as in the case of the above-described pilot gas mixture forefront portion, the cylinder interior gas serves as a peripheral gas that surrounds the main gas mixture forefront portion. Meanwhile after the main gas mixture forefront portion has reached the stagnating pilot gas mixture, the stagnating pilot gas mixture serves as the peripheral gas.

Accordingly, until the main gas mixture forefront portion reaches the stagnating pilot gas mixture, the main gas mixture temperature Tmixm(k) after the point of the post main injection time tm = 0 can be successively obtained, at the computation intervals of the CPU 61, in accordance with the following Equation (20) which is related to the main gas mixture, corresponds to the above-described Equation (9), and uses the temperature Ta and specific heat Ca of the cylinder interior gas, which serves as the peripheral gas.

$$Tmixm(k) = (Cmixm(k-1) \cdot Tmixm(k-1) + Am \cdot Ca \cdot Ta)/$$

$$(Cmixm(k-1) + Am \cdot Ca) \qquad (20)$$

Meanwhile, after the main gas mixture forefront portion has reached the stagnating pilot gas mixture, the main gas mixture temperature Tmixm(k) can be successively obtained, at the computation intervals of the CPU 61, in accordance with the following Equation (21) which is obtained from Equation (20) by replacing the temperature Ta and specific heat Ca of the cylinder interior gas with the temperature Tmixp(k) and specific heat Cmixp(k-1) of the stagnating pilot gas mixture, which serves as the peripheral gas.

$$Tmixm(k) =$$

$$(Cmixm(k-1) \cdot Tmixm(k-1) + Am \cdot Cmixp(k-1) \cdot Tmixp(k))/$$

$$(Cmixm(k-1) + Am \cdot Cmixp(k-1)) \qquad (21)$$

Further, in order to specify the point in time when the main gas mixture forefront portion reaches the stagnating pilot gas mixture, there must be obtained the travel distance (main gas mixture travel distance) Xm over which the main gas mixture forefront portion travels from the injection opening of the fuel injection valve 21 after start of the main injection, and the distance between the injection opening and the inner side surface of the pilot gas mixture stagnating in an annular configuration as shown in FIG. 5.

As in the case of the pilot gas mixture, the main gas mixture travel distance Xm can be obtained as a function of post main injection time tm in accordance with an equation which is related to the main gas mixture and corresponds to the above-described Equation (12). Further, the distance between the injection opening of the fuel injection valve 21 and the inner side surface of the pilot gas mixture stagnating in an annular configuration (hereinafter referred to as "pilot gas mixture inner wall surface distance Xmixp") can be represented by the following Equation (22) similar to the above-described Equation (14).

$$Xmixp = (a - rc)/\cos(\theta f) \qquad\qquad (22)$$

The present apparatus repeatedly calculates the main gas mixture travel distance Xm from the equation corresponding to the above-described Equation (12) after the start of the main injection, and when the condition "the main gas mixture travel distance Xm ≥ the pilot gas mixture inner wall surface distance Xmixp° is satisfied, the present apparatus determines that the main gas mixture forefront portion has collided against the inner wall surface of the pilot gas mixture.

The present apparatus successively obtains, at the computation intervals, the main gas mixture temperature Tmixm(k) after the point of the post main injection time tm = 0 in accordance with the above-described Equation (20) until the main gas mixture forefront portion is determined to have reached the inner wall surface of the stagnating pilot gas mixture. Meanwhile, the present apparatus successively obtains, at the computation intervals, the main gas mixture temperature Tmixm(k) in accordance with the above-described Equation (21) after the main gas mixture forefront portion is determined to have reached the inner wall surface of the stagnating pilot gas mixture. The above is the outline of the method for obtaining the main gas mixture temperature Tmixm(k).

Outline of Fuel Injection Control

The present apparatus sets the target ignition timing to a predetermined timing (ATDCθref, e.g., ATDC10°). In order to render the ignition timing of the main gas mixture (its forefront portion) coincident with the target ignition timing ATDCθref, the present apparatus feed-back controls the fuel injection start timings and the fuel injection pressure such that the main gas mixture temperature Tmixm(k) (hereinafter referred to as "control-use final gas mixture temperature Tmixfinc") obtained (in accordance with the above-described Equation (20) or Equation (21)) when the crank angle CA coincides with ATDCθref coincides with a predetermined target gas mixture temperature Tmixref.

Specifically, when the value of the control-use final gas mixture temperature Tmixfinc obtained for the previous fuel injection cylinder (cylinder for which fuel injection is performed) is higher than the target gas mixture temperature Tmixref, the fuel injection start timings of the pilot injection and the main injection for the current fuel injection cylinder are delayed from the respective base fuel injection timings by a predetermined amount, and the fuel injection pressure is decreased from the base fuel injection pressure by a predetermined amount. Thus, the actual gas mixture temperature at the target ignition timing ATDCθref for the current fuel injection cylinder is controlled to decrease. As a result, the actual ignition timing of the current fuel injection cylinder is rendered coincident with the target ignition timing ATDCθref.

Meanwhile, when the value of the control-use final gas mixture temperature Tmixfinc obtained for the previous fuel injection cylinder is lower than the target gas mixture temperature Tmixref, the fuel injection start timings of the pilot injection and the main injection for the current fuel injection cylinder are advanced from the respective base fuel injection timings by a predetermined amount, and the fuel injection pressure is increased from the base fuel injection pressure by a predetermined amount. Thus, the actual gas mixture temperature at the target ignition timing ATDCθref for the current fuel injection cylinder is controlled to increase. As a result, the actual ignition timing of the current fuel injection cylinder is rendered coincident with the target ignition timing ATDCθref. The above is the outline of fuel injection control.

Actual Operation

Next, actual operations of the engine control apparatus having the above-described configuration will be described.

<Control of Fuel Injection Quantities, Etc.>

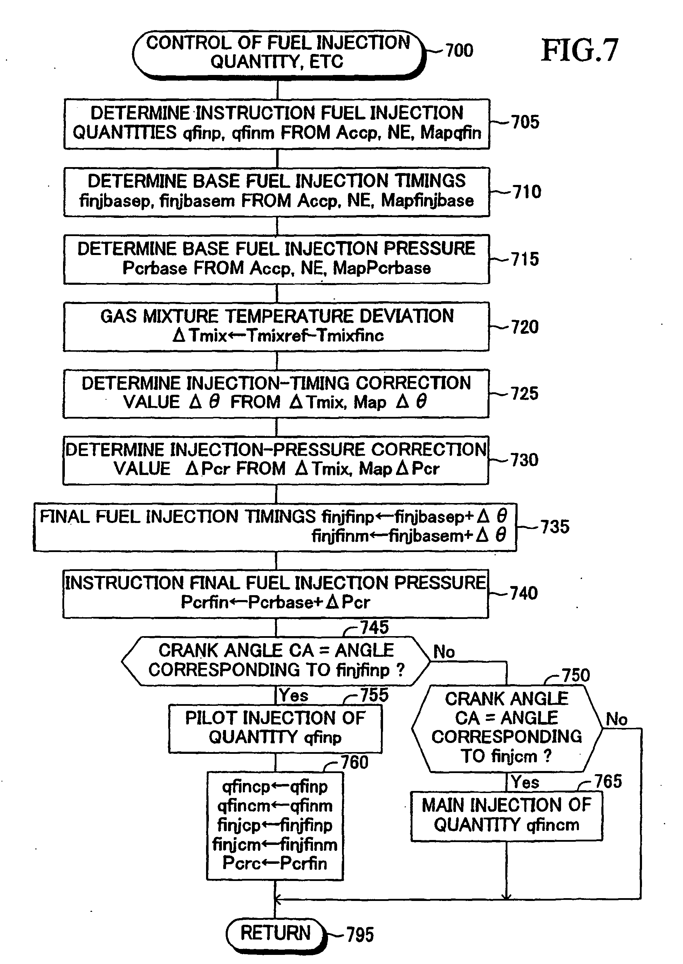

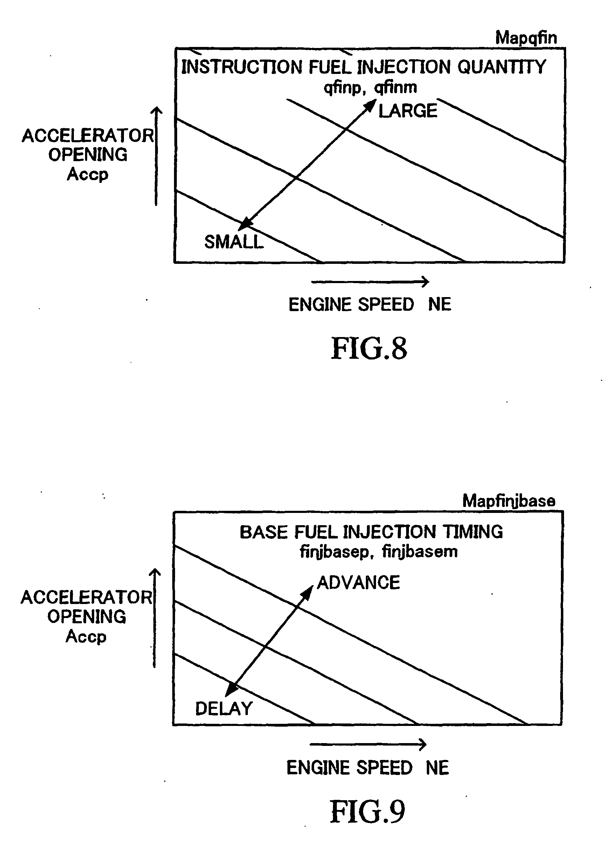

The CPU 61 repeatedly executes, at predetermined intervals, a routine shown by the flowchart of FIG. 7 and adapted to control fuel injection quantities, fuel injection timings, and fuel injection pressure. Therefore, when a predetermined timing has been reached, the CPU 61 starts the processing from step 700, and then proceeds to step 705 so as to obtain an instruction pilot fuel injection quantity qfinp and an instruction main fuel injection quantity qfinm from the accelerator opening Accp, the engine speed NE, and a table (map) Mapqfin shown in FIG. 8. The table Mapqfin defines the relation between accelerator opening Accp and engine speed NE, and instruction fuel injection quantities qfinp and qfinm; and is stored in the ROM 62.

Subsequently, the CPU 61 proceeds to step 710 so as to determine a base pilot fuel injection timing finjbasep and a base main fuel injection timing finjbasem from the accelerator opening Accp, the engine speed NE, and a table Mapfinjbase shown in FIG. 9. The table Mapfinjbase defines the relation between accelerator opening Accp and engine speed NE, and base fuel injection timings finjbasep and finjbasem; and is stored in the ROM 62.

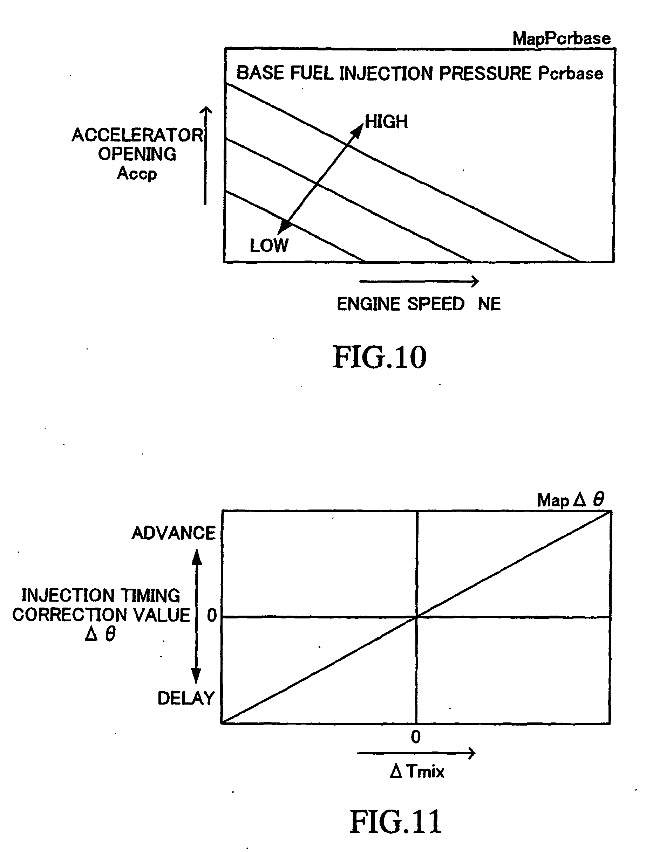

Subsequently, the CPU 61 proceeds to step 715 so as to determine a base fuel injection pressure Pcrbase from the accelerator opening Accp, the engine speed NE, and a table MapPcrbase shown in FIG. 10. The table MapPcrbase defines the relation between accelerator opening Accp and engine speed NE, and base fuel injection pressure Pcrbase; and is stored in the ROM 62.

Next, the CPU 61 proceeds to step 720 and stores, as a gas mixture temperature deviation ΔTmix, a value obtained by subtracting, from the target gas mixture temperature Tmixref, the latest control-use final gas mixture temperature Tmixfinc (for the previous fuel injection cylinder) obtained by a routine which will be described later.

Subsequently, the CPU 61 proceeds to step 725 so as to determine an injection-timing correction value Δθ on the basis of the gas mixture temperature deviation ΔTmix and with reference to a table MapΔθ shown in FIG. 11. The table MapΔθ defines the relation between gas mixture temperature deviation ΔTmix and injection-timing correction value Δθ, and is stored in the ROM 62.

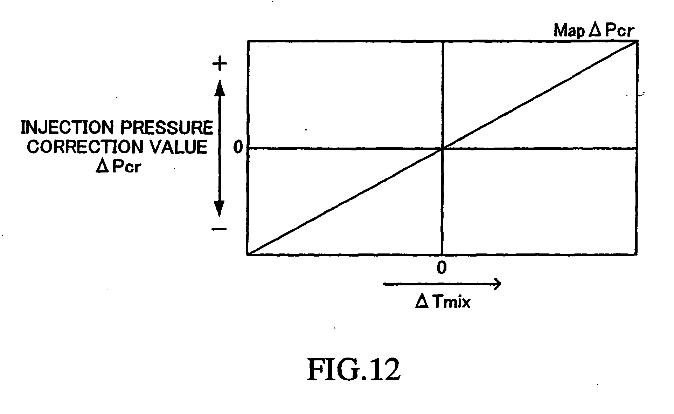

After that, the CPU 61 proceeds to step 730 so as to determine an injection-pressure correction value ΔPcr on the basis of the gas mixture temperature deviation ΔTmix and with reference to a table MapΔPcr shown in FIG. 12. The table MapΔPcr defines the relation between gas mixture temperature deviation ΔTmix and injection-pressure correction value ΔPcr, and is stored in the ROM 62.

Next, the CPU 61 proceeds to step 735 so as to correct the base pilot fuel injection timing finjbasep and the base main fuel injection timing finjbasem by the injection-timing correction value Δθ to thereby obtain a final pilot fuel injection timing finjfinp and a final main fuel injection timing finjfinm. Thus, the fuel injection timings are corrected in accordance with the gas mixture temperature deviation ΔTmix. As is apparent from FIG. 11, when the gas mixture temperature deviation ΔTmix is positive, the injection-timing correction value Δθ becomes positive, and its magnitude increases with the magnitude of the gas mixture temperature deviation ΔTmix, whereby the final fuel injection timings finjfinp and finjfinm are shifted toward the advance side. When the gas mixture temperature deviation ΔTmix is negative, the injection-timing correction value Δθ becomes negative, and its magnitude increases with the magnitude of the gas mixture temperature deviation ΔTmix, whereby the final fuel injection timings finjfinp and finjfinm are shifted toward the delay side.

Subsequently, the CPU 61 proceeds to step 740 so as to correct the base fuel injection pressure Pcrbase by the injection-pressure correction value ΔPcr to thereby obtain an Instruction final fuel injection pressure Pcrfin. Thus, the fuel injection pressure is corrected in accordance with the gas mixture temperature deviation ΔTmix. As is apparent from FIG. 12, when the gas mixture temperature deviation ΔTmix is positive, the injection-pressure correction value ΔPcr becomes positive, and its magnitude increases with the magnitude of the gas mixture temperature deviation ΔTmix, whereby the instruction final fuel injection pressure Pcrfin is shifted toward the high pressure side. When the gas mixture temperature deviation ΔTmix is negative, the injection-pressure correction value ΔPcr becomes negative, and its magnitude increases with the magnitude of the gas mixture temperature deviation ΔTmix, whereby the instruction final fuel injection pressure Pcrfin is shifted toward the low pressure side. As a result, the discharge pressure of the fuel injection pump 22 is controlled, whereby fuel pressurized to the determined instruction final fuel injection pressure Pcrfin is supplied to the fuel injection valves 21.

In step 745, the CPU 61 determines whether the crank angle CA at the present point In time coincides with an angle corresponding to the determined final pilot fuel injection timing finjfinp. Here, the description will be continued under the assumption that the crank angle CA at the present point in time has not yet reached the angle corresponding to the final pilot fuel injection timing finjfinp. In this case, the CPU 61 makes a "No" determination in step 745, and proceeds to step 750 so as to determine whether the crank angle CA at the present point in time coincides with an angle corresponding to the determined final main fuel injection timing finjfinm. In this case, the CPU 61 makes a "No" determination in step 750 as well, and proceeds to step 795 so as to end the current execution of the present routine.

After that, the CPU 61 repeatedly executes the processing of steps 700 to 745, 750, and 795 until the crank angle CA at the present point in time reaches the angle corresponding to the final pilot fuel injection timing finjfinp. When the crank angle CA at the present point in time reaches the angle corresponding to the final pilot fuel injection timing finjfinp, the CPU 61 makes a "Yes" determination when it proceeds to step 745, and then proceeds to step 755 so as to cause the fuel injection valve 21 for the relevant fuel injection cylinder to inject the fuel pressurized to the determined instruction final fuel injection pressure Pcrfin in the determined instruction pilot fuel injection quantity qfinp.

Subsequently, the CPU 61 proceeds to step 760 so as to store the instruction fuel injection quantities qfinp and qfinm as a control-use pilot fuel injection quantity qfincp and a control-use main fuel injection quantity qfincm, respectively, store the final fuel injection timings finjfinp and finjfinm as a control-use pilot fuel injection timing finjcp and a control-use main fuel injection timing finjcm, respectively, and store the instruction final fuel injection pressure Pcrfin as a control-use fuel injection pressure Pcrc. The CPU 61 then proceeds to step 795 so as to end the current execution of the present routine.

After that, the CPU 61 repeatedly executes the processing of steps 700 to 745, 750, and 795 until the crank angle CA at the present point in time reaches the angle corresponding to the control-use main fuel injection timing finjcm.

When the crank angle CA at the present point in time reaches the angle corresponding to the control-use main fuel injection timing finjcm, the CPU 61 makes a "Yes" determination when it proceeds to step 750, and then proceeds to step 765. In step 765, the CPU 61 causes the fuel injection valve 21 for the relevant fuel injection cylinder to inject the fuel pressurized to the determined instruction final fuel injection pressure Pcrfin in the control-use main fuel injection quantity qfincm. Through the above-described processing, control of fuel injection quantities, fuel injection timings, and fuel injection pressure is achieved.

<Calculation of Various Physical Quantities at Pilot Injection Start Time>

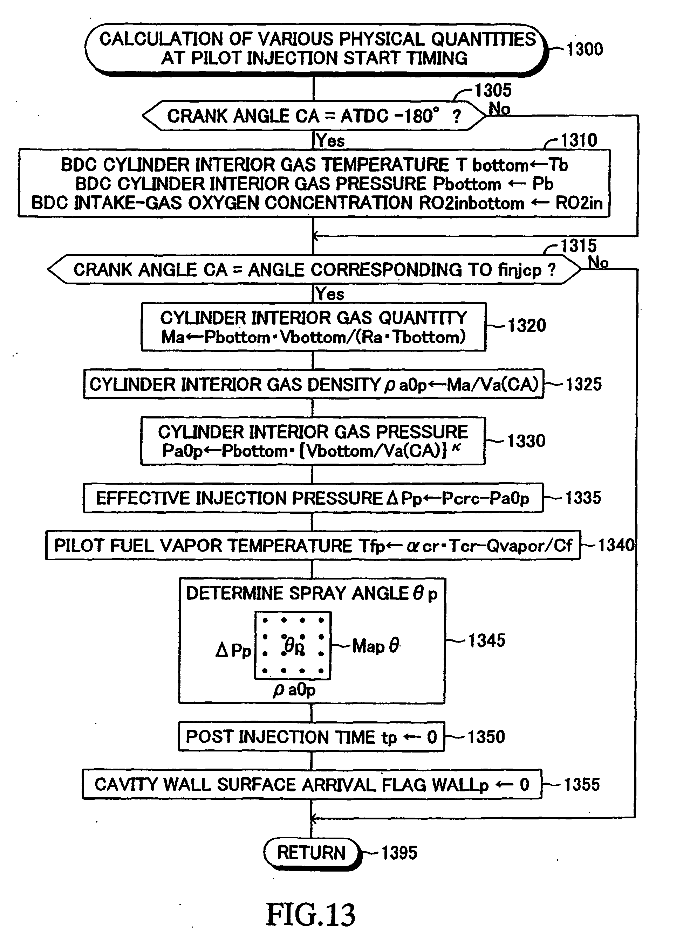

Next, operation for calculating various physical quantities at pilot injection start time will be described. The CPU 61 repeatedly executes, at predetermined intervals, a routine shown by the flowchart of FIG. 13. Therefore, when a predetermined timing has been reached, the CPU 61 starts the processing from step 1300, and then proceeds to step 1305 so as to determine whether the crank angle CA at the present point in time coincides with ATDC-180° (i.e., whether the piston of the fuel Injection cylinder is located at bottom dead center of the compression stroke).

The description will be continued under the assumption that the piston of the fuel injection cylinder has not reached bottom dead center of the compression stroke. In this case, the CPU 61 makes a "No" determination in step 1305, and proceeds to step 1315 so as to monitor and determine whether the crank angle CA at the present point in time has reached the angle corresponding to the control-use pilot fuel injection timing finjcp (i.e., whether the present point in time is the pilot injection start timing of the fuel injection cylinder).

At the present point in time, the piston has not reached bottom dead center of the compression stroke, and the pilot injection start timing has not yet come. Therefore, the CPU 61 makes a "No" determination in step 1315, and proceeds directly to step 1395 so as to end the current execution of the present routine. After that, the CPU 61 repeatedly performs the processing of steps 1300, 1305, 1315, and 1395 until the piston of the fuel injection cylinder reaches bottom dead center of the compression stroke.

Next, the piston of the fuel injection cylinder is assumed to have reached bottom dead center of the compression stroke in this state. In this case, the CPU 61 makes a "Yes" determination when it proceeds to step 1305, and proceeds to step 1310. In step 1310, the CPU 61 stores, as bottom-dead-center cylinder interior gas temperature Tbottom, the intake-gas temperature Tb detected by means of the intake-gas temperature sensor 72 at the present point in time, stores, as bottom-dead-center cylinder interior gas pressure Pbottom, the intake pipe pressure Pb detected by means of the intake pipe pressure sensor 73 at the present point in time, and stores, as bottom-dead-center intake-gas oxygen concentration RO2inbottom, the intake-gas oxygen concentration RO2in detected by means of the intake-gas oxygen concentration sensor 78 at the present point in time. After making a "No" determination in step 1315, the CPU 61 proceeds directly to step 1395 so as to end the current execution of the present routine. After that, the CPU 61 repeatedly performs the processing of steps 1300, 1305, 1315, and 1395 until the fuel injection start timing comes.

Next, the pilot injection start timing is assumed to have come after elapse of a predetermined time. In this case, the CPU 61 makes a "Yes" determination when it proceeds to step 1315, and proceeds to step 1320 so as to start the processing for calculating various physical quantities at the pilot injection start time. In step 1320, the CPU 61 obtains the total mass Ma of the cylinder interior gas in accordance with the above-mentioned Equation (5). At this time, the values set in step 1310 are used as values of Tbottom and Pbottom.

Subsequently, the CPU 61 proceeds to step 1325 so as to obtain a cylinder interior gas density $\rho a0p$ as measured at the pilot injection start time, on the basis of the total mass Ma of the cylinder interior gas, the cylinder interior volume Va(CA) at the present point in time, and an equation described in the box of step 1325.

Subsequently, the CPU 61 proceeds to step 1330 so as to obtain a cylinder interior gas pressure Pa0p as measured at the pilot injection start time in accordance with an equation described in the box of step 1330 and corresponding to the above-described Equation (4), and then proceeds to step 1335 so as to set, as an effective injection pressure $\Delta Pp$, a value obtained through subtraction of the cylinder interior gas pressure Pa0p from the control-use fuel injection pressure Pcrc set in the previously described step 760.

Next, the CPU 61 proceeds to step 1340 so as to obtain a pilot fuel vapor temperature Tfp in accordance with an equation described in the box of step 1340 and corresponding to the above-described Equation (11). The fuel temperature detected by means of the fuel temperature sensor 76 at the present point in time is used as fuel temperature Tcr. Subsequently, the CPU 61 proceeds to step 1345 so as to determine a spray angle $\theta p$ on the basis of the cylinder interior gas density pa0p, and the effective injection pressure $\Delta Pp$, while referring to the above-described table Map$\theta$.

After that, the CPU 61 proceeds to step 1350 so as to initialize the post pilot injection time tp to "0," proceeds to step 1355 so as to set a cavity wall surface arrival flag WALLp to "0," and then proceeds to step 1395 so as to end the current execution of the present routine. The cavity wall surface arrival flag WALLp indicates that the pilot gas mixture forefront portion has arrived at the cavity inner wall surface (side surface 24b) when its value is "1," and indicates that the pilot gas mixture forefront portion has not yet arrived at the cavity inner wall surface when its value is "0."

After that, the CPU 61 repeatedly performs the processing of steps 1300, 1305. 1315, and 1395 until the crank angle CA in relation to the next fuel injection cylinder coincides with ATDC-180° (i.e., until the piston of the next fuel injection cylinder reaches bottom dead center of the compression stroke). Through the above-described processing, various physical quantities at the pilot injection start time are calculated. In addition, the values of the post pilot injection time tp and the value of the cavity wall surface arrival flag WALLp are both reset to "0."

<Calculation of Pilot Gas mixture Temperature>

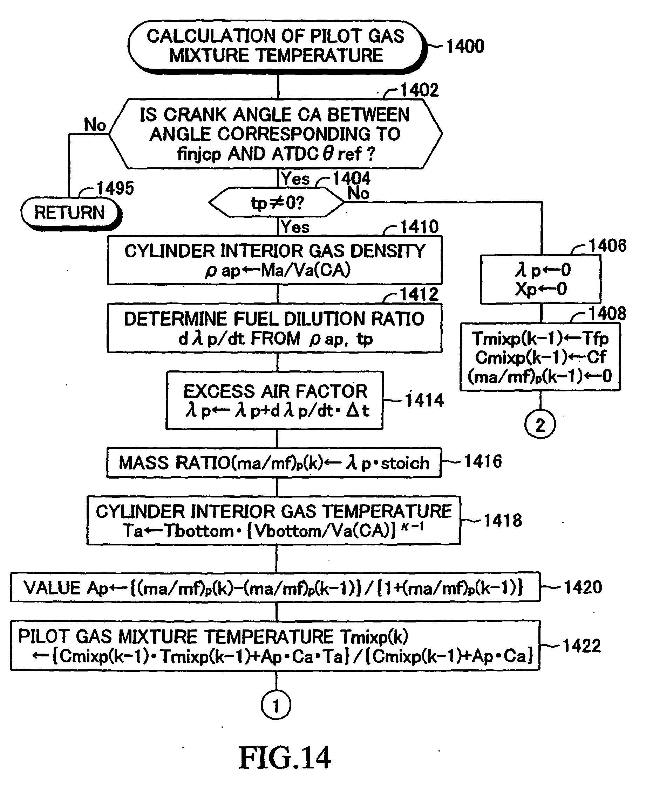

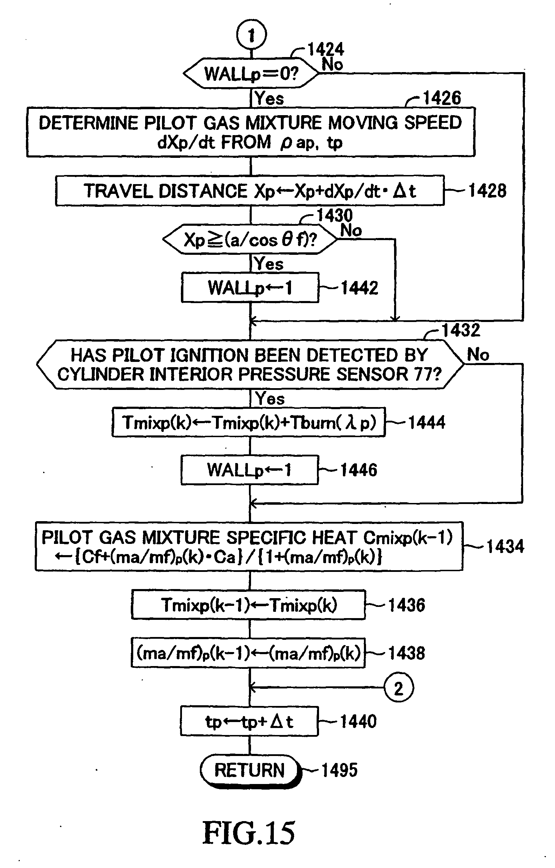

Meanwhile, the CPU 61 repeatedly executes, at predetermined intervals, a routine shown by the flowcharts of FIGS. 14 and 15 and adapted to calculate pilot gas mixture temperature. Therefore, when a predetermined timing has been reached, the CPU 61 starts the processing from step 1400, and then proceeds to step 1402 so as to monitor and determine whether the crank angle CA at the present point in time is between the angle corresponding to the control-use pilot fuel injection timing finjcp and the target ignition timing ATDCθref. When the CPU 61 makes a "No" determination in step 1402, the CPU 61 proceeds directly to step 1495 so as to end the current execution of the present routine.

Now, it is assumed that the present point in time is the pilot injection start time; i.e, the crank angle CA at the present point in time coincides with the angle corresponding to the above-mentioned control-use pilot fuel injection timing finjcp (accordingly, the present point in time is immediately after performance of the processing of the previously described steps 1320 to 1355 of FIG. 13). In this case, the CPU 61 makes a "Yes" determination in step 1402, and proceeds to step 1404 so as to determine whether post pilot injection time tp is non-zero.

The present point in time is immediately after performance of the processing of the previously described step 1350, and post injection time tp is "0." Therefore, the CPU 61 makes a "No" determination in step 1404, and proceeds to step 1406 so as to initialize the values of the pilot gas mixture travel distance Xp and the excess air factor λp related to the pilot injection to "0." In step 1408 subsequent thereto, the CPU 61 stores, as a pilot gas mixture temperature previous value Tmixp(k-1), the pilot fuel vapor temperature Tfp calculated in the previously described step 1340 of FIG. 13, stores the value of the specific heat Cf of the fuel vapor as the pilot gas mixture specific heat Cmixp(k-1), and stores "0" as the mass ratio previous value (ma/mf)p(k-1) related to the pilot injection.

After that, the CPU 61 proceeds to step 1440 of FIG. 15 so as to store, as a new post pilot injection time tp, a time obtained through addition of $\Delta$t to the present value of the post pilot injection time tp ("0" at the present point in time). Subsequently, the CPU 61 proceeds to step 1495 so as to end the current execution of the present routine. $\Delta$t represents the computation intervals of the present routine.

As a result of the processing in step 1440, the present post pilot injection time tp becomes non-zero. Therefore, after this point in time, when the CPU 61 proceeds to step 1404 in the course of repeated execution of the present routine, the CPU 61 makes a "Yes" determination, and then proceeds to step 1410. In step 1410, the CPU 61 obtains the current value of cylinder interior gas density pap on the basis of the total mass Ma of the cylinder interior gas obtained in the previously described step 1320 of FIG. 13, the cylinder interior volume Va(CA) at the present point in time, and an equation described in the box of step 1410.

Subsequently, the CPU 61 proceeds to step 1412 so as to obtain a fuel dilution ratio d$\lambda$p/dt related to the pilot injection on the basis of the above-mentioned cylinder interior gas density pap, the present post pilot injection time tp, and an equation which is used in relation to the pilot injection and corresponds to the above-mentioned Equation (3), and then proceeds to step 1414 so as to obtain the excess air factor λp related to the pilot injection through integrating the fuel dilution ratio d$\lambda$p/dt with time in accordance with an equation which is used in relation to the pilot injection and corresponds to the above-mentioned Equation (2). The values $\Delta$Pp and θp calculated in steps 1335 and 1345 of FIG. 13, respectively, are used as values of the effective injection pressure $\Delta$P and spray angle θ in the above-mentioned Equation (3).

Next, the CPU 61 proceeds to step 1416 so as to obtain a mass ratio current value (ma/mf)p(k) related to the pilot injection on the basis of the value of the excess air factor λp related to the pilot injection and in accordance with the equation based on the above-mentioned Equation (1) and described in the box of step 1416. In step 1418 subsequent thereto, the CPU 61 obtains the cylinder interior gas temperature Ta at the present point in time on the basis of the cylinder interior volume Va(CA) at the present point in time and the above-mentioned Equation (7).

Subsequently, in step 1420, in accordance with an equation which is used in relation to the pilot injection and corresponds to the above-described Equation (10), the CPU 61 obtains a value Ap on the basis of the mass ratio current value (ma/mf)p(k) obtained in step 1416 and the mass ratio previous value (ma/mf)p(k-1) stored in step 1438, which will be described later, during the previous execution of the present routine (stored in the previously described step 1408 only during the current execution of the present routine).

Next, in step 1422, in accordance with an equation which is used in relation to the pilot injection and corresponds to the above-described Equation (9), the CPU 61 obtains a pilot gas mixture temperature current value Tmixp(k) on the basis of the pilot gas mixture specific heat Cmixp(k-1) stored in step 1434, which will be described later, during the previous execution of the present routine (stored in the previously described step 1408 only during the current execution of the present routine), the pilot gas mixture temperature previous value Tmixp(k-1) stored in step 1436, which will be described later, during the previous execution of the present routine (stored in the previously described step 1408 only during the current execution of the present routine), the value of Ap, and the value of the cylinder interior gas temperature Ta.

Next, the CPU 61 proceeds to step 1424 of FIG. 15, and determines whether the value of the cavity wall surface arrival flag WALLp is "0." At the present point in time, the value of the cavity wall surface arrival flag WALLp is "0," because of the processing of the previously described step 1355. Therefore, the CPU 61 makes a "Yes" determination in step 1424 and then proceeds to step 1426 so as to obtain a pilot gas mixture moving speed dXp/dt based on the value of the cylinder interior gas density pap obtained in step 1410 and the present value of the post pilot injection time tp, and in accordance with an equation which is used in relation to the pilot injection and corresponds to the above-described Equation (13). In step 1428 subsequent thereto, the CPU 61 integrates the pilot gas mixture moving speed dXp/dt with time in accordance with an equation which is used in relation to the pilot injection and corresponds to the above-described Equation (12) to thereby obtain the pilot gas mixture travel distance Xp at the present point in time. The values $\Delta$Pp and $\theta$p calculated in steps 1335 and 1345, respectively, of FIG. 13 are used as values of the effective injection pressure $\Delta$P and spray angle $\theta$ in the above-mentioned Equation (13).

Next, the CPU 61 proceeds to step 1430, and determines whether the pilot gas mixture travel distance Xp is not less than the combustion chamber inner wall surface distance Xwall (i.e., whether the pilot gas mixture forefront portion has reached the inner wall surface of the combustion chamber). Here, the description is continued under the assumption that the pilot gas mixture forefront portion has not yet reached the inner wall surface of the combustion chamber and ignition has not yet occurred. In this case, the CPU 61 makes a "No" determination in step 1430, and proceeds directly to step 1432. In step 1432, the CPU 61 monitors and determines whether ignition has been detected on the basis of a change in the cylinder interior gas pressure Pa of the fuel injection cylinder sensed by means of the cylinder interior pressure sensor 77.

Since ignition has not yet occurred at the present point in time, the CPU 61 makes a "No" determination in step 1432, and proceeds directly to step 1434. In step 1434, the CPU 61 calculates the pilot injection gas mixture specific heat Cmixp(k-1) on the basis of the mass ratio current value (ma/mf)p(k) related to the pilot injection and calculated in the previously described step 1416 and in accordance with an equation which is used in relation to the pilot injection and corresponds to the above-described Equation (6).

Subsequently, the CPU 61 proceeds to step 1436, and stores, as the pilot gas mixture temperature previous value Tmixp(k-1), the value of the pilot gas mixture temperature current value Tmixp(k) obtained in the previously described step 1422. In step 1438, the CPU 61 stores, as the mass ratio previous value (ma/mf)p(k-1), the value of the mass ratio current value (ma/mf)p(k) obtained in the previously described step 1416. After that, the CPU 61 increases the value of the post pilot injection time tp by $\Delta$t in step 1440, and proceeds to step 1495 so as to complete the current execution of the present routine.

Before the pilot gas mixture forefront portion reaches the inner wall surface of the combustion chamber and ignition occurs, the CPU 61 repeatedly executes the processing of steps 1400 to 1404, 1410 to 1430, 1432, and 1434 to 1440, whereby the pilot gas mixture temperature current value Tmixp(k) serving as adiabatic gas mixture temperature is repeated updated in step 1422.

Next, the case where the pilot gas mixture forefront portion has reached the inner wall surface of the combustion chamber (i.e., the pilot gas mixture has started stagnation in an annular configuration) will be described. In this case, the CPU 61 makes a "Yes" determination when it proceeds to step 1430, and then proceeds to step 1442 so as to change the value of the cavity wall surface arrival flag WALL$_p$ form "0" to "1."After that, the CPU 61 performs the above-described processing of step 1432 and subsequent steps. As a result, after that point in time, the CPU 61 makes a "No" determination when it proceeds to step 1424, and performs the processing the processing of step 1432 and subsequent steps. After that, until ignition occurs, the CPU 61 repeatedly performs the processing of steps 1400 to 1404, 1410 to 1424, 1432, and 1434 to 1440.

Next, the case where ignition of the pilot gas mixture has occurred in this state will be described. In this case, the CPU 61 makes a "Yes" determination when it proceeds to step 1432, and then proceeds step 1444 so as to obtain the combustion-attributable temperature elevation Tburn($\lambda$p) and store, as a new pilot gas mixture temperature current value Tmixp(k), a value obtained through addition of the temperature elevation Tburn($\lambda$p) to the latest pilot gas mixture temperature current value Tmixp(k) calculated in the previously described step 1422, whereby the pilot gas mixture temperature is corrected. At this time, $\lambda$p is the latest excess air factor $\lambda$p related to the pilot injection and calculated in the previously described step 1414. Notably, the temperature elevation Tburn($\lambda$p) is a function which provides a value which becomes maximum when $\lambda$p is the stoichiometric air-fuel ratio stoich, and decreases as the deviation of $\lambda$p from the stoichiometric air-fuel ratio stoich increases, when such a deviation is produced.

Next, the CPU 61 proceeds to step 1446 so as to set the value of the cavity wall surface arrival flag WALLp to "1" and then performs the above-described processing of step 1434 and subsequent steps. Notably, in the case where ignition occurs after the pilot gas mixture forefront portion has reached the wall surface of the combustion chamber as in the present point in time, since the value of WALLp has been set to "1" through execution of the above-described step 1442, the value of WALLp does not change even when step 1446 is executed. In other words, the case where ignition occurs before the pilot gas mixture forefront portion reaches the wall surface of the combustion chamber, the value of WALLp is immediately changed from "0" to "1" through execution of the above-described step 1446. The reason of this is that due to energy of ignition (explosion) of the pilot gas mixture, the pilot gas mixture is considered to immediately reach the wall surface of the combustion chamber and stagnates in an annular configuration.

After that, until the crank angle CA at the present point in time reaches the target ignition timing ATDCθref, the CPU 61 repeatedly performs the processing of steps 1400 to 1404, 1410 to 1424, 1432, and 1434 to 1440. As a result, step 1422 is repeatedly preformed, whereby the post-ignition pilot gas mixture temperature (i.e., flame temperature) Tmixp(k) serving as adiabatic gas mixture temperature is updated at the computation intervals.

<Calculation of Thickness of Pilot Gas Mixture>

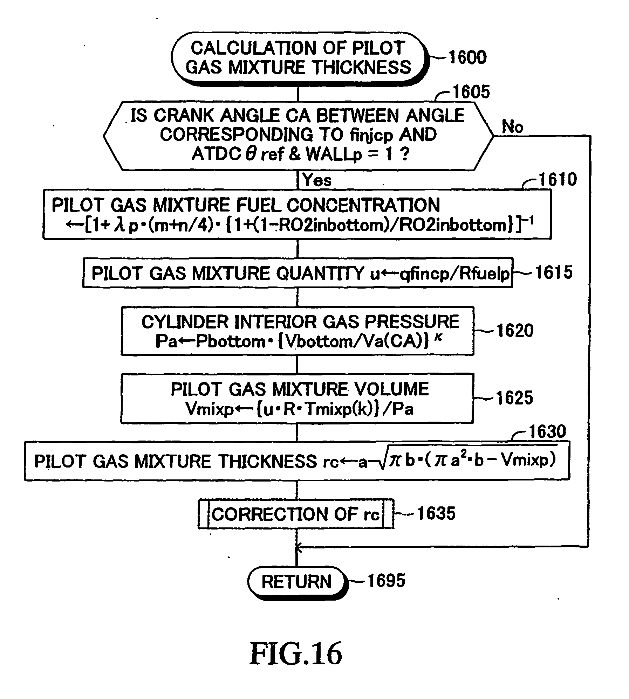

Further, the CPU 61 repeatedly executes, at predetermined intervals, a routine shown by the flowchart of FIG. 16 and adapted to calculate the thickness of the pilot gas mixture stagnating in an annular configuration (pilot gas mixture thickness rc). Therefore, when a predetermined timing has been reached, the CPU 61 starts the processing from step 1600, and then proceeds to step 1605 so as to monitor and determine whether the crank angle CA at the present point in time is between the angle corresponding to the control-use pilot fuel injection timing finjcp and the target ignition timing ATDCθref and the value of the cavity wall surface arrival flag WALLp to "1." When the CPU 61 makes a "No" determination in step 1605, the CPU 61 proceeds directly to step 1695 so as to end the current execution of the present routine. The reason why the "WALLp = 1" is added to the determination condition of step 1605 is that since the timing at which the pilot gas mixture stagnates in an annular configuration is after the pilot gas mixture forefront portion has reached the cavity wall surface, calculation of the pilot gas mixture thickness rc must be performed after the value of WALLp has been changed from "0" to "1".

Here, the description will be continued under the assumption that the value of WALLp has been changed to "1" through performance of the previously described step 1442 (or step 1446) (accordingly, under the assumption that the pilot gas mixture is stagnating in an annular configuration). In this case, the CPU 61 makes a "Yes" determination in step 1605, and then proceeds to step 1610 so as to calculate the fuel concentration Rfuelp of the pilot gas mixture stagnating in an annular configuration based on the value of the bottom-dead-center intake-gas oxygen concentration RO2inbottom stored in the previously described step 1310 and the latest excess air factor λp related to the pilot injection and updated in the previously described step 1414, and in accordance with an equation described in the box of step 1610 and corresponding to the above-described Equation (15).

Next, the CPU 61 proceeds to step 1615 so as to obtain the pilot gas mixture quantity u on the basis of the control-use pilot fuel injection quantity qfincp stored in the previously described step 760 and the value of the above-described pilot gas mixture fuel concentration Rfuelp, and in accordance with an equation described in the box of step 1615 and corresponding to the above-described Equation (16). In step 1620 subsequent thereto, the CPU 61 obtains the cylinder interior gas pressure Pa on the basis of the cylinder interior volume Va(CA) at the present point in time, and an equation described in the box of step 1620.

Subsequently, the CPU 61 proceeds to step 1625 so as to obtain the pilot gas mixture volume Vmixp on the basis of the above-described pilot gas mixture quantity u, the latest pilot gas mixture temperature Tmixp(k) updated in the previously described step 1422, and the above-described cylinder interior gas pressure Pa, and in accordance with the above-described Equation (17). In step 1630 subsequent thereto, the CPU 61 obtains the pilot gas mixture thickness rc at the present point in time on the basis of the value of the pilot gas mixture volume Vmixp and in accordance with the above-described Equation (19). Subsequently, the CPU 61 proceeds to step 1695 so as to end the current execution of the present routine.

Notably, step 1635 is used only in a second embodiment which will be described later, and is not used in the first embodiment. After that, the CPU 61 repeatedly executes the processing of steps 1605 to 1630 until the crank angle CA at the present point in time reaches the target ignition timing ATDCθref. As a result, through repeated execution of step 1630, the value of the pilot gas mixture thickness rc is repeatedly updated. The above is the description of the routines related to the pilot injection. Next, the routines related to the main injection will be described.

<Calculation of Various Physical Quantities at Main Injection Start Time>

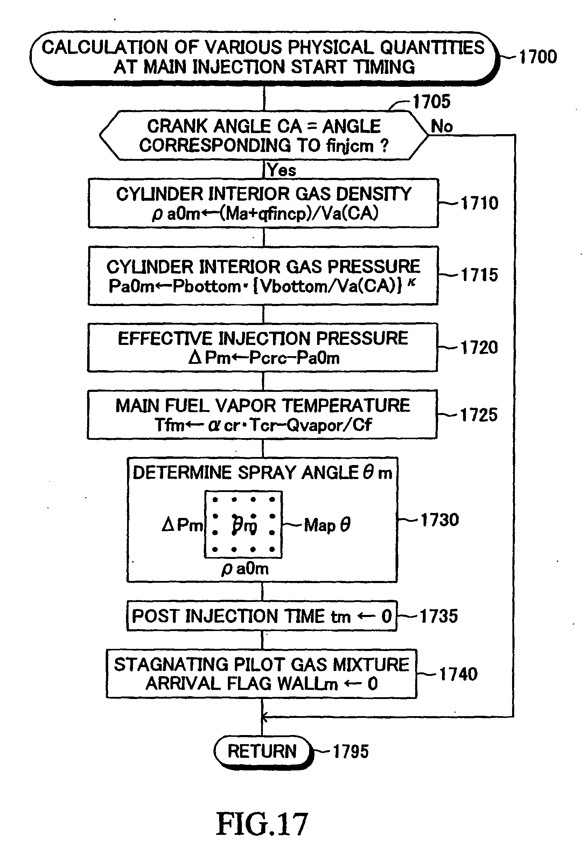

Next, operation for calculating various physical quantities at main injection start time will be described. The CPU 61 repeatedly executes, at predetermined intervals, a routine shown by the flowchart of FIG. 17. The routine of FIG. 17 related to the main injection corresponds to the above-described routine of FIG. 13 related to the pilot injection. Therefore, only the main differences between routine of FIG. 13 and that of FIG. 17 will be described.

The eight steps 1705 to 1740 of the routine of FIG. 17 correspond to the eight steps 1315, 1325 to 1355 of the routine of FIG. 13. Accordingly, the routine of FIG. 17 does not include steps corresponding to steps 1305, 1310, and 1320.

Further, in the equation described in step 1710 for obtaining the cylinder interior gas density pa0m at the main injection start time, the control-use pilot fuel injection quantity qfincp is added to the numerator, because of the following reason. At the main injection start time, the pilot injection has already been performed. Therefore, the quantity (total mass) of the cylinder interior gas at the main injection start time is equal to the value obtained by adding the pilot fuel injection quantity to the cylinder interior gas quantity Ma calculated in the previously described step 1320.

Notably, a stagnating pilot gas mixture arrival flag WALLm in step 1740 indicates that the main gas mixture forefront portion has reached the inner side surface of the pilot gas mixture stagnating in an annular configuration when Its value is "1," and indicates that the main gas mixture forefront portion has not yet reached the inner side surface of the pilot gas mixture when its value is "0." a Through the above-described processing, various physical quantities at the main injection start time are calculated. In addition, the values of the post main injection time Tm and the value of the stagnating pilot gas mixture arrival flag WALLm are both reset to "0."

<Calculation of Main Gas mixture Temperature>

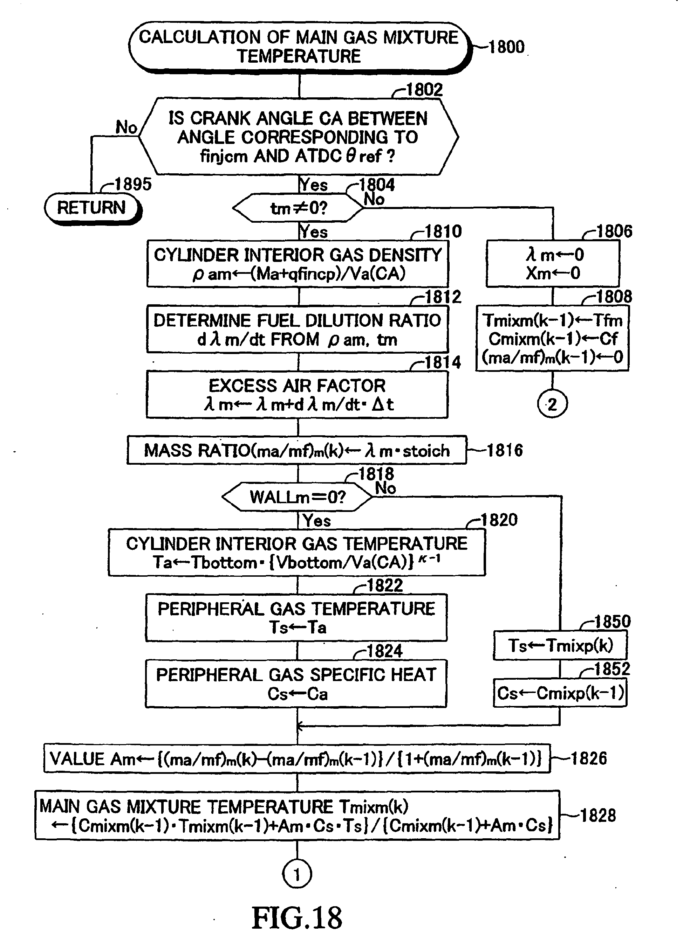

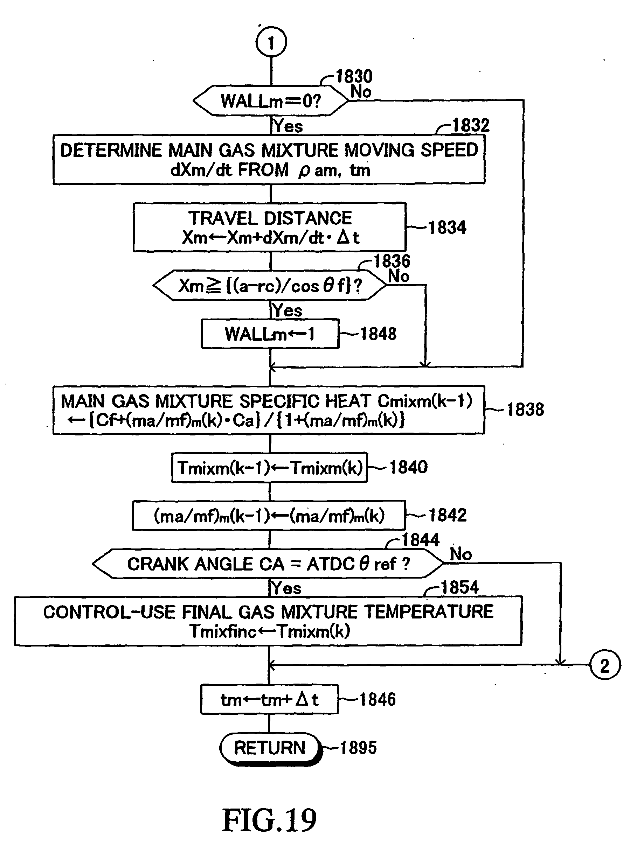

Next, operation for calculating main gas mixture temperature will be described. The CPU 61 repeatedly executes, at predetermined intervals, a routine shown by the flowcharts of FIGS. 18 and 19. The routine of FIGS. 18 and 19 related to the main injection corresponds to the above-described routine of FIGS. 14 and 15 related to the pilot injection. Therefore, only the main differences between routine of FIGS. 14 and 15 and that of FIGS. 18 and 19 will be described.

Steps 1802 to 1816 of the routine of FIGS. 18 and 19 correspond to steps 1402 to 1416 of the routine of FIGS. 14 and 15, respectively. Steps 1830 to 1836 correspond to steps 1424 to 1430, respectively. Steps 1838 to 1842 correspond to steps 1434 to 1438, respectively. Steps 1846 and 1848 correspond to steps 1440 and 1442, respectively.

Steps 1818 to 1828 of the routine of FIGS. 18 and 19 are replacement of steps 1418 to 1422 of the routine of FIGS. 14 and 15. Accordingly, the routine of FIGS. 18 and 19 does not contain steps which correspond to steps 1432, 1444, and 1446 related to ignition. Meanwhile, steps 1844 and 1854 are newly added to the routine of FIGS. 18 and 19.

In the equation described in step 1810 for obtaining the cylinder interior gas density pam, the control-use pilot fuel injection quantity qfincp is added to the numerator, because of the same reason as the case of the above-described step 1710. Further, in step 1836 for determining whether the main gas mixture forefront portion has reached the pilot gas mixture stagnating in an annular configuration, the main gas mixture travel distance Xm is compared with the above-described pilot gas mixture inner wall surface distance Xmixp (= (a - rc)/cosθf). The latest value repeatedly calculated in the previously described step 1630 of FIG. 16 is used as the pilot gas mixture thickness rc.

The processing of steps 1818 to 1828 will now be described. In step 1818, the CPU 61 determines whether the value of the stagnating pilot gas mixture arrival flag WALLm is "0." Here, the main gas mixture forefront portion is first assumed not to have reached the stagnating pilot gas mixture (its inner wall surface). In this case, the value of the stagnating pilot gas mixture arrival flag WALLm has been "0" after it had been set by the processing of the previously described step 1740. Therefore, the CPU 61 makes a "Yes" determination In step 1818, and then proceeds to step 1820 so as to obtain the cylinder interior gas temperature Ta at the present point in time in the same manner as in the previously described step 1418.

Next, the CPU 61 proceeds to step 1822 so as to store the value of the cylinder interior gas temperature Ta as the temperature Ts of the peripheral gas, and then proceeds to step 1824 so as to store the value of the cylinder interior gas specific heat Ca as the specific heat Cs of the peripheral gas. This is because the cylinder interior gas surrounds the main gas mixture (its forefront portion) at the present state.

Subsequently, the CPU 61 proceeds to step 1826 so as to obtain a value Am in the same manner as in the previously described step 1420. Specifically, the CPU 61 obtains the value Am on the basis of the mass ratio current value (ma/mf)m(k) related to the main injection and obtained in step 1816 and the mass ratio previous value (ma/mf)m(k-1) related to the main injection and stored in step 1842, and in accordance with an equation described in the box of step 1826.

Next, the CPU 61 proceeds to step 1828 so as to calculate a main gas mixture temperature current value Tmixm(k) in accordance with an equation described in the box of step 1828 and on the basis of the main gas mixture specific heat Cmixm(k-1) calculated in step 1838, the main gas mixture temperature previous value Tmixm(k-1) stored in step 1840, the value of Am, the peripheral gas specific heat Cs, and the peripheral gas temperature Ts.

After that, the CPU 61 repeatedly executes the processing of steps 1818 and 1820 to 1828 until the main gas mixture forefront portion reaches the stagnating pilot gas mixture (its inner wall surface). As a result, the main gas mixture temperature current value Tmixm(k) is repeated updated. In the present stage, the cylinder interior gas specific heat Ca and the cylinder interior gas temperature Ta are used as the values of the peripheral gas specific heat Cs and the peripheral gas temperature Ts. Therefore, in the present stage, the equation described in the box of step 1828 corresponds to the above-described Equation (20).

When the main gas mixture forefront portion reaches the stagnating pilot gas mixture (its inner wall surface), the CPU 61 makes a "Yes" determination in step 1836, whereby the value of the stagnating pilot gas mixture arrival flag WALLm is changed from "0" to "1." Therefore, the CPU 61 makes a "No" determination when it proceeds to step 1818, and then proceeds to step 1850.

In step 1850, the CPU 61 stores the value of the stagnating pilot gas mixture temperature Tmixp(k) as the temperature Ts of the peripheral gas. In step 1852 subsequent thereto, the CPU 61 stores the value of the pilot gas mixture specific heat Cmixp(k-1) as the specific heat Cs of the peripheral gas. After that, the CPU 61 performs the processing of the previously described steps 1826 and 1828. This is because the stagnating pilot gas mixture surrounds the main gas mixture (its forefront portion) at the present state. Notably, the latest values calculated in the previously described steps 1422 and 1434 are used as the value of Tmixp(k) and the value of Cmixp(k-1), respectively.

After that, the CPU 61 repeatedly executes the processing of steps 1818, 1850, 1852, 1826, and 1828 until the crank angle CA at the present point in time reaches the target ignition timing ATDCθref. As a result, the main gas mixture temperature current value Tmixm(k) is repeatedly updated. In the present stage, the pilot gas mixture specific heat Cmixp(k-1) and the pilot gas mixture temperature Tmixp(k) are used as the values of the peripheral gas specific heat Cs and the peripheral gas temperature Ts. Therefore, in the present stage, the equation described in the box of step 1828 corresponds to the above-described Equation (21).

When the crank angle CA at the present point in time reaches the target ignition timing ATDCθref, the CPU 61 makes a "Yes" determination when its proceeds to the above-described newly added step 1844, and then proceeds to step 1854 so as to store, as the control-use final gas mixture temperature Tmixfinc, the latest main gas mixture temperature Tmixm(k) updated in step 1828 at the present point in time. The value of the control-use final gas mixture temperature Tmixfinc is used in step 720 of the routine of FIG. 7 which is executed for the next fuel injection cylinder. As a result, the fuel injection timings and the fuel injection pressure of the engine are feedback-controlled on the basis of the value Tmixfinc.

After that, the CPU 61 makes a "No" determination when its proceeds to step 1402 of FIG. 14 and step 1802 of FIG. 18, and proceeds directly to step 1495 and step 1895, respectively. As a result, the calculation (update) of the pilot gas mixture temperature Tmixp(k) before and after ignition and the calculation (update) of the main gas mixture temperature Tmixm(k) before ignition are ended. The calculation of the gas mixture temperatures is resumed when the pilot injection for the next fuel injection cylinder is executed.

As described above, in the first embodiment of the engine control apparatus including the gas mixture temperature estimation apparatus according to the present invention, when fuel injected by means of the main injection (accordingly, the main gas mixture) is proceeding within the combustion chamber, the pilot gas mixture injected by means of the pilot injection and combusted is assumed to be stagnating in an annular configuration in the vicinity of the side wall of a combustion chamber (the side surface 24b of the cavity 24d). During a period in which the main gas mixture forefront portion is determined not to have reached the stagnating pilot gas mixture (i.e., when WALLm = 0), the main gas mixture temperature Tmixm(k) is estimated on the basis of the temperature (Ta) and the specific heat (Ca) of the cylinder interior gas which serves as the peripheral gas. After the main gas mixture forefront portion is determined to have reached the stagnating pilot gas mixture (i.e., when WALLm = 1), the main gas mixture temperature Tmixm(k) is estimated on the basis of the temperature (Tmixp(k)) and the specific heat (Cmixp(k-1)) of the stagnating pilot gas mixture which serves as the peripheral gas.

The temperature of the main gas mixture is estimated by making use of the temperature and specific heat of the peripheral gas which is properly switched between the cylinder interior gas and the pilot gas mixture before and after the forefront portion of the main gas mixture reaches the stagnating pilot gas mixture. As a result, the ignition timing can be rendered accurately coincident with the target ignition timing on the basis of the temperature of the main gas mixture.

Second Embodiment:

Next, a gas mixture temperature estimation apparatus for an internal combustion engine according to a second embodiment of the present invention will be described. The present gas mixture temperature estimation apparatus differs from that of the first embodiment only in that the present gas mixture temperature estimation apparatus takes into consideration the above-described unevenness of the radial thickness of the pilot gas mixture stagnating in an annular configuration (pilot gas mixture thickness rc) stemming from a small number of injection openings of each fuel injection valve. Hereinafter, this difference will be described.

<Calculation of Pilot Gas Mixture Thickness in Consideration of Unevenness>

In the engine control apparatus including the present gas mixture temperature estimation apparatus, the number of injection openings of the fuel injection valve 21 provided for each cylinder is four, which differs from the number (10) in the first embodiment. As shown in FIG. 20A, fuel injected from the fuel injection valve 21 disperse in four directions along X-axis and Y-axis which perpendicularly intersect each other as viewed from the upper side of the cylinder. In this case, as shown In FIG. 20B, the radial thickness of the pilot gas mixture which stagnates in the vicinity of the side surface 24b of the cavity 24d after the pilot gas mixture forefront portion has reached the side surface 24b is considered to greatly change in the circumferential direction in such a manner that the thickness at positions corresponding to the X-axis and Y-axis directions (i.e., positions corresponding to the injection directions of the pilot injection) is greater than the thickness at positions which deviate from the X-axis and Y-axis directions (i.e., positions deviating from the injection directions of the pilot injection).

In this case, the degree of unevenness of the pilot gas mixture thickness is considerably large as compared with the first embodiment, and therefore, such unevenness cannot be ignored. Meanwhile, even in the case where the radial thickness of the stagnating pilot gas mixture greatly changes in the circumferential direction as described above, the degree of unevenness is considered to decrease with elapse of time, when the manner in which the stagnating pilot gas mixture subsequently disperses is taken into account.

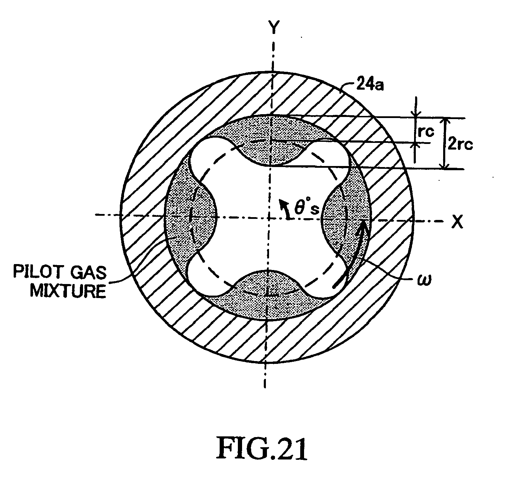

In view of the foregoing, in the present embodiment, a model as shown in FIG. 21 is considered. In this model; the time elapsed after the pilot gas mixture forefront portion has reached the cavity side wall surface is represented by texp, and the rotation angle is represented by θs, as shown in FIG. 21. The thickness rc of the pilot gas mixture stagnating in an annular configuration is represented by the following Equation (23) as a function of the rotation angle θs and the elapsed time texp.

$$rc = rc \cdot \{1 + exp(-texp/B) \cdot cos(4 \cdot \theta s)\} \qquad (23)$$

In Equation (23), rc on the right side represents the latest pilot gas mixture thickness calculated (updated) in the previously described step 1630 of FIG. 16. B is a constant. As can be understood from Equation (23), in this model, at the time of arrival of the pilot gas mixture forefront portion at the cavity side wall surface (i.e., the elapsed time texp = 0), the pilot gas mixture thickness rc becomes "2·rc" at rotation angles θs of 0°, 90°, 180°, and 270°, and becomes "0" at rotation angles θs of 45°, 135°, 225°, and 315°. That is, FIG. 21 shows the state of distribution of the pilot gas mixture at the elapsed time texp = 0.

<Consideration of Swirl Flow Velocity>

In the internal combustion engine of the present embodiment, a swirl flow velocity ω (flow velocity in the circumferential direction; see FIG. 21) generated by means of a swirl is imparted to the cylinder interior gas in order to improve the combustion efficiency. Accordingly, the pilot gas mixture (including the pilot gas mixture represented by the model using Equation (23) and stagnating in an annular configuration) moving within the combustion chamber and the main gas mixture moving within the combustion chamber are both considered to rotate, together with the cylinder interior gas, in the circumferential direction at the swirl flow velocity ω. In the internal combustion engine, under the assumption that the swirl ratio RatioSw is constant, the swirl flow velocity ω (rotation angle per unit time) can be obtained in accordance with the following Equation (24). In Equation (24), NE represents the engine speed at the present point in time.

$$\omega = 360° \cdot RatioSw \cdot NE \qquad (24)$$

Therefore, the total angle (hereinafter referred to as "final rotation angle θsc") over which the pilot gas mixture produced by means of the pilot injection rotates in the circumferential direction between start of the pilot injection and start of the main injection can be calculated by integrating the swirl flow velocity ω obtained from Equation (24) with time over a period between start of the pilot injection and start of the main injection.

That is, at the point in time when the main injection starts, the pilot gas mixture produced by means of the pilot injection has already rotated counterclockwise in FIG. 21 by the above-mentioned final rotation angle θsc. In other words, at the point in time when the main injection starts, the injection direction of the main injection corresponds to the direction of θs = (-θsc) in FIG. 21.

After the main injection has started, the main gas mixture rotates at the swirl flow velocity ω together with the pilot gas mixture (already stagnating in an annular configuration). That is, the relative circumferential angle of the main gas mixture forefront portion relative to the pilot gas mixture stagnating in an annular configuration does not change after the main injection has started.

From the above, the position at which the main gas mixture forefront portion reaches the stagnating pilot gas mixture corresponds to the direction of θs = (-θsc) in FIG. 21. Accordingly, the pilot gas mixture thickness rc which is required to specify the time at which the main gas mixture forefront portion reaches the stagnating pilot gas mixture can be obtained (rc obtained in step 1630 of FIG. 16 can be corrected) by the following Equation (25), which is obtained from the above-described Equation (23) through replacement of θs with (-θsc).

$$rc = rc \cdot \{1 + \exp(-texp/B) \cdot \cos(4 \cdot (-\theta sc))\}$$

$$= rc \cdot \{1 + \exp(-texp/B) \cdot \cos(4 \cdot \theta sc)\} \qquad (25)$$

As described above, the gas mixture temperature estimation apparatus according to the second embodiment obtains the final rotation angle θsc obtained upon passage of the main injection start time, repeatedly corrects the pilot gas mixture thickness rc in accordance with Equation (25), and determines, on the basis of the corrected rc, whether or not the main gas mixture forefront portion has reached the stagnating pilot gas mixture.

Actual Operation of Second Embodiment

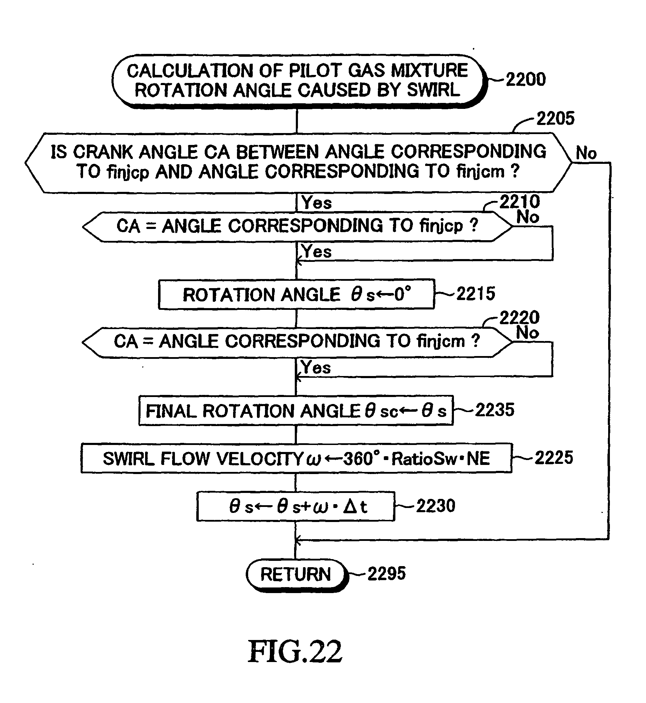

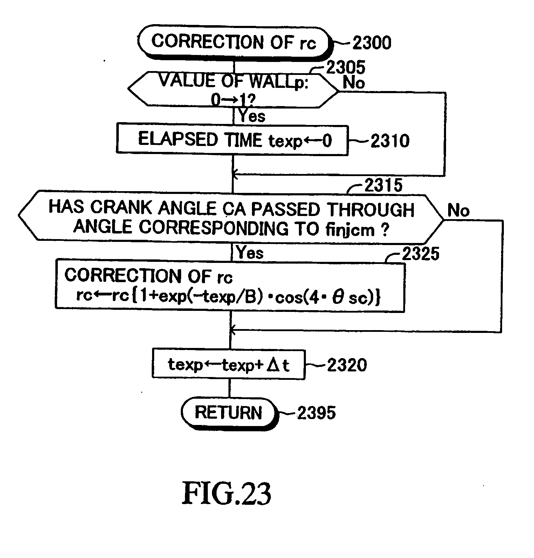

Next, actual operations of the gas mixture temperature estimation apparatus according to the second embodiment will be described. The CPU 61 of the present apparatus executes the routines shown in FIG. 7 and FIGS. 13 to 19, which the CPU 61 of the first embodiment execute, and additionally executes routines shown by the flowcharts of FIGS. 22 and 23. Further, the CPU 61 additionally executes step 1635 in the routine shown in FIG. 16. The routines peculiar to the second embodiment will be described successively.

The CPU 61 repeatedly executes, at predetermined intervals, the routine shown by the flowchart of FIG. 22 and adapted to calculate the final rotation angle θsc of the pilot gas mixture stemming from a swirl. Therefore, when a predetermined timing has been reached, the CPU 61 starts the processing from step 2200, and then proceeds to step 2205 so as to determine whether the crank angle CA at the present point in time is between the angle corresponding to the control-use pilot fuel injection timing finjcp and the angle corresponding to the control-use main fuel injection timing finjcm. When the CPU 61 makes a "No" determination in step 2205, the CPU 61 proceeds directly to step 2295 so as to end the current execution of the present routine.

Here, the crank angle CA is assumed to be coincident with the angle corresponding to finjcp. In this case, the CPU 61 makes a "Yes" determination in step 2205, and then proceeds to step 2210 so as to determine whether the crank angle CA at the present point in time coincides with the angle corresponding to finjcp. After making a "Yes" determination in step 2210, the CPU 61 proceeds to step 2215 so as to initialize the rotation angle θs to "0°."

Subsequently, the CPU 61 proceeds to step 2220 so as to determine whether the crank angle CA at the present point in time coincides with the angle corresponding to finjcm. After making a "No" determination in step 2220, the CPU 61 proceeds to step 2225. In step 2225, the CPU 61 obtains the swirl flow velocity ω at the present point in time on the basis of the engine speed NE at the present point in time and in accordance with the above-described Equation (24).

Next, the CPU 61 proceeds to step 2230 so as to store, as a new rotation angle θs, a value obtained through addition of "ω·Δt" to the rotation angle θs at that point in time (0° at the present point in time). After that, the CPU 61 proceeds to step 2295 so as to end the current execution of the present routine. Δt represents the computation intervals of the present routine. After that, the CPU 61 repeatedly executes the processing of steps 2200 to 2210, 2220, 2225, and 2230 until the crank angle CA reaches the angle corresponding to finjcm. Through repeated execution of step 2230, the swirl flow velocity ω is integrated with time.

When the crank angle CA has reached the angle corresponding to finjcm, the CPU 61 makes a "Yes" determination when it proceeds to step 2220, and then proceeds to step 2235. In step 2235, the CPU 61 stores, as the final rotation angle θsc, the value of the rotation angle θs at the present point in time. After that, the CPU 61 makes a "No" determination when it proceeds to step 2205, and then proceeds directly to step 2295 so as to end the current execution of the present routine. In this manner, the final rotation angle θsc is obtained through integration of the swirl flow velocity ω with time.

Meanwhile, in the case where the CPU 61 makes a "Yes" determination in step 1605 of the routine shown in FIG. 16, after calculating the pilot gas mixture thickness rc in step 1630, the CPU 61 starts via step 1635 the routine shown in FIG. 23 and adapted to correct the pilot gas mixture thickness rc. Specifically, the CPU 61 starts the routine from step 2300, and proceeds to step 2305 so as to monitor and determine whether the value of the cavity wall surface arrival flag WALLp has been changed from "0" to "1."

Here, the present point in time is assumed to be immediately after the pilot gas mixture forefront portion has reached the cavity wall surface. In this case, the present point in time is immediately after the cavity wall surface arrival flag WALLp has been changed from "0" to "1" upon execution of step 1442 of FIG. 14. Therefore, the CPU 61 makes a "Yes" determination in step 2305, and then proceeds to step 2310 so as to initialize the elapsed time texp to "0."

Next, the CPU 61 proceeds to step 2315 so as to determine whether the crank angle CA has passed through the angle corresponding to the control-use main fuel injection timing finjcm (i.e., whether the main injection start timing has passed). Since the present point in time is immediately after the pilot gas mixture forefront portion has reached the cavity wall surface, the CPU 61 makes a "No" determination in step 2315, and then proceeds to step 2320 so as to store, as a new elapsed time texp, a value obtained through addition of $\Delta t$ to the value of the elapsed time texp at that point in time ("0" at the present point in time). After that, the CPU 61 proceeds via step 2395 to step 1695 to thereby end the current execution of the routine shown in FIG. 16. $\Delta t$ represents the computation intervals of the routine shown in FIG. 23.

After that, the CPU 61 repeatedly executes the processing of steps 2300, 2305, 2315, and 2320 of the routine of FIG. 23 until the crank angle CA passes through the angle corresponding to finjcm. Through repeated execution of step 2320, the elapsed time texp is updated.

When the main injection start timing has passed, after that, the CPU 61 makes a "Yes" determination when it proceeds to step 2315, and then proceeds to step 2325 so as to correct the pilot gas mixture thickness rc obtained in step 1630 of FIG. 16, on the basis of the value of the latest elapsed time texp updated in step 2320 and the value of the final rotation angle $\theta sc$ obtained through execution of step 2235 of FIG. 22, and in accordance with the above-described Equation (25). The thus-corrected value of the pilot gas mixture thickness rc is used in step 1836 of FIG. 19.

As described above, in the gas mixture temperature estimation apparatus according to the second embodiment of the present invention, the pilot gas mixture thickness rc at the position where the main gas mixture forefront portion reaches the stagnating pilot gas mixture is obtained in consideration of the unevenness of the radial thickness of the pilot gas mixture stagnating in an annular configuration, a decrease with time in the degree of unevenness of the radial thickness, and circumferential rotation of the pilot gas mixture (including the pilot gas mixture stagnating in an annular configuration) moving within the combustion chamber and the main gas mixture moving within the combustion chamber, which rotation is caused by a swirl. Accordingly, the determination as to whether the main gas mixture has reached the stagnating pilot gas mixture can be made more accurately. As a result, the main gas mixture temperature can be estimated more accurately.

The present invention is not limited to the above-described embodiments, and may be modified in various manners within the scope of the present invention. For example, the following modifications may be employed. In the above-described embodiments, the value of the pilot gas mixture thickness rc is obtained, in accordance with the above-described Equation (19), as a value which depends not only on the pilot fuel injection quantity qfinp but also on the cylinder interior gas pressure Pa, the pilot gas mixture temperature Tmixp(k), and the excess air ratio $\lambda p$ related to the pilot injection (step 1630). However, the embodiments may be modified in such a manner that the pilot gas mixture thickness rc is obtained a simplified manner as a value which depends only on the pilot fuel injection quantity qfinp.

In the above-described embodiments, each of the pilot gas mixture temperature and the main gas mixture temperature is obtained as an "adiabatic gas mixture temperature" by use of the temperature and specific heat of the peripheral gas. However, the embodiments may be modified In such a manner that at least one of the pilot gas mixture temperature and the main gas mixture temperature is obtained from the adiabatic gas mixture temperature through correction in consideration of heat exchange with the peripheral gas.

In the above-described embodiments, the cylinder interior gas pressure Pa is calculated in accordance with an equation which represents adiabatic changes of a gas (see steps 1330, 1620, etc.). However, the cylinder interior gas pressure Pa may be detected by use of the cylinder interior pressure sensor 77.

In the second embodiment, the pilot gas mixture thickness rc is corrected on the basis of the elapsed time texp; i.e., the time elapsed after the pilot gas mixture forefront portion has reached the cavity wall surface (see the above-described Equation (25) and step 2310). However, the second embodiment may be configured to correct the pilot gas mixture thickness rc on the basis of an elapsed time texp as measured from a point which is delayed from the pilot injection start time by a predetermined time. In this case, the predetermined time is preferably set in accordance with the pilot fuel injection quantity qfinp.

## Claims

1. A gas mixture temperature estimation apparatus for an internal combustion engine configured such that, in each operation cycle, fuel for pilot injection is injected into a combustion chamber, and then fuel for main injection is injected into the combustion chamber, the gas mixture temperature estimation apparatus comprising main-gas-mixture temperature estimation means for estimating temperature of a main gas mixture, which is a gas mixture produced by means of the main injection, the gas mixture temperature estimation apparatus being **characterized by** further comprising:

   cylinder-interior-gas temperature estimation means for estimating temperature of a cylinder interior gas, which is a gas having been taken into the combustion chamber;

pilot-gas-mixture temperature estimation means for estimating temperature of a pilot gas mixture, which is a gas mixture produced by means of the pilot injection; and

determination means for determining whether the main gas mixture has reached the pilot gas mixture under the assumption that the pilot gas mixture is stagnating in a generally annular configuration in the vicinity of a side wall of the combustion chamber, wherein

the main-gas-mixture temperature estimation means estimates the temperature of the main gas mixture by making use of the temperature of the cylinder interior gas in a period during which the main gas mixture is determined not to have reached the stagnating pilot gas mixture, and estimates the temperature of the main gas mixture by making use of the temperature of the pilot gas mixture after the main gas mixture is determined to have reached the stagnating pilot gas mixture.

2. A gas mixture temperature estimation apparatus for an internal combustion engine according to claim 1, wherein the determination means is configured so as to unevenly set the radial thickness of the pilot gas mixture stagnating in a generally annular configuration such that the thickness at a position corresponding to the injection direction of the pilot injection is thicker than that at a position not corresponding to the injection direction of the pilot Injection.

3. A gas mixture temperature estimation apparatus for an internal combustion engine according to claim 2, wherein the determination means is configured so as to reduce with time the degree of unevenness of the radial thickness of the pilot gas mixture stagnating in a generally annular configuration.

4. A gas mixture temperature estimation apparatus for an internal combustion engine according to claim 2 or 3, further comprising swirl flow velocity obtaining means for obtaining a value representing a velocity of a swirl flow produced by a swirl, wherein the determination means is
configured to change the position corresponding to the injection direction of the pilot injection and the position not corresponding to the injection direction of the pilot injection, the positions being set with respect to the pilot gas mixture stagnating in a generally annular configuration, in accordance with the obtained value representing the swirl flow velocity.

5. A gas mixture temperature estimation apparatus for an internal combustion engine according to claim 4, wherein the value representing the swirl flow velocity is an engine speed for the case where the swirl ratio is constant.

6. A gas mixture temperature estimation apparatus for an internal combustion engine according to any one of claims 2 to 5, wherein the number of injection openings from which fuel is injected is equal to or less than a predetermined number.

7. A gas mixture temperature estimation apparatus for an internal combustion engine according to any one of claims 1 to 6, wherein the cylinder-interior-gas temperature estimation means estimates the temperature of the cylinder interior gas under the assumption that the state of the cylinder interior gas confined within the combustion chamber adiabatically changes with movement of a piston.

8. A gas mixture temperature estimation apparatus for an internal combustion engine according to any one of claims 1 to 7, wherein the pilot-gas-mixture temperature estimation means estimates the temperature of the pilot gas mixture by making use of the temperature of the cylinder interior gas.

9. A gas mixture temperature estimation apparatus for an internal combustion engine according to any one of claims 1 to 8, wherein the determination means determines whether the main gas mixture has reached the stagnating pilot gas mixture on the basis of the position of a forefront portion of the main gas mixture and the radial thickness of the pilot gas mixture stagnating in the generally annular configuration.

10. A gas mixture temperature estimation apparatus for an internal combustion engine according to claim 9, wherein the position of the forefront portion of the main gas mixture is obtained as a function of time elapsed after the start of the main injection in accordance with a predetermined empirical formula.

11. A gas mixture temperature estimation apparatus for an internal combustion engine according to claim 9 or 10, wherein the radial thickness of the pilot gas mixture is obtained on the basis of a volume occupied by the pilot gas mixture.

12. A gas mixture temperature estimation apparatus for an internal combustion engine according to claim 11, wherein the volume occupied by the pilot gas mixture is obtained from at least one of the quantity of fuel injected by means of the pilot injection, the excess air factor of the stagnating pilot gas mixture, the temperature and pressure of the stagnating pilot gas mixture, and the gas state equation regarding the stagnating pilot gas mixture.

**Patentansprüche**

1. Vorrichtung zur Schätzung einer Temperatur eines Gasgemisches für eine Brennkraftmaschine, die derart gestaltet ist, dass in jedem Betriebszyklus ein Kraftstoff für eine Voreinspritzung in eine Brennkammer eingespritzt wird und dann ein Kraftstoff für eine Haupteinspritzung in die Brennkammer eingespritzt wird, wobei die Vorrichtung zur Schätzung einer Temperatur eines Gasgemisches eine Einrichtung zur Schätzung einer Temperatur eines Hauptgasgemisches zum Schätzen einer Temperatur eines Hauptgasgemisches aufweist, das ein Gasgemisch ist, das mittels der Haupteinspritzung erzeugt wird, wobei die Vorrichtung zur Schätzung einer Temperatur eines Gasgemisches **dadurch gekennzeichnet ist, dass** sie des Weiteren Folgendes aufweist:

   eine Einrichtung zur Schätzung einer Temperatur eines Gases im Zylinderinnenraum zum Schätzen einer Temperatur eines Gases im Zylinderinnenraum, das ein Gas ist, das in die Brennkammer eingebracht worden ist;
   eine Einrichtung zur Schätzung einer Temperatur eines Vorgasgemisches zum Schätzen einer Temperatur eines Vorgasgemisches, das ein Gasgemisch ist, das mittels der Voreinspritzung erzeugt wird; und
   eine Bestimmungseinrichtung zum Bestimmen, ob das Hauptgasgemisch das Vorgasgemisch erreicht hat, gemäß der Annahme, dass das Vorgasgemisch in der Umgebung einer Seitenwand der Brennkammer in einer im Allgemeinen ringförmigen Anordnung stagniert, wobei
   die Einrichtung zur Schätzung einer Temperatur eines Hauptgasgemisches die Temperatur des Hautgasgemisches durch Anwendung der Temperatur des Gases im Zylinderinnenraum in einer Dauer schätzt, während der bestimmt wird, dass das Hauptgasgemisch nicht das stagnierende Vorgasgemisch erreicht hat, und die Temperatur des Hauptgasgemisches durch Anwendung der Temperatur des Vorgasgemisches schätzt, nachdem es bestimmt wird, dass das Hauptgasgemisch das stagnierende Vorgasgemisch erreicht hat.

2. Vorrichtung zur Schätzung einer Temperatur eines Gasgemisches für eine Brennkraftmaschine nach Anspruch 1, wobei die Bestimmungseinrichtung gestaltet ist, um die radiale Dicke des Vorgasgemisches, das in einer im Allgemeinen ringförmigen Anordnung stagniert, ungleichmäßig festzulegen, derart, dass die Dicke an einer Position, die zu der Einspritzrichtung der Voreinspritzung korrespondiert, dicker ist als die an einer Position, die nicht zu der Einspritzrichtung der Voreinspritzung korrespondiert.

3. Vorrichtung zur Schätzung einer Temperatur eines Gasgemisches für eine Brennkraftmaschine nach Anspruch 2, wobei die Bestimmungseinrichtung gestaltet ist, um mit der Zeit den Grad der Ungleichmäßigkeit der radialen Dicke des Vorgasgemisches, das in einer im Allgemeinen ringförmigen Anordnung stagniert, zu reduzieren.

4. Vorrichtung zur Schätzung einer Temperatur eines Gasgemisches für eine Brennkraftmaschine nach Anspruch 2 oder 3, die des Weiteren eine Einrichtung zum Erhalten einer Drallströmungsgeschwindigkeit zum Erhalten eines Werts aufweist, der eine Geschwindigkeit einer Drallströmung wiedergibt, die durch einen Drall erzeugt wird, wobei die Bestimmungseinrichtung gestaltet ist, um die Position, die zu der Einspritzrichtung der Voreinspritzung korrespondiert, und die Position zu verändern, die nicht zu der Einspritzrichtung der Voreinspritzung korrespondiert, wobei die Positionen in Bezug auf das Vorgasgemisch, das in einer im Allgemeinen ringförmigen Anordnung stagniert, in Übereinstimmung mit dem erhaltenen Wert, der die Drallströmungsgeschwindigkeit wiedergibt, festgelegt werden.

5. Vorrichtung zur Schätzung einer Temperatur eines Gasgemisches für eine Brennkraftmaschine nach Anspruch 4, wobei der Wert, der die Drallströmungsgeschwindigkeit wiedergibt, eine Maschinendrehzahl für den Fall ist, in dem das Drallverhältnis konstant ist.

6. Vorrichtung zur Schätzung einer Temperatur eines Gasgemisches für eine Brennkraftmaschine nach einem der Ansprüche 2 bis 5, wobei die Anzahl an Einspritzöffnungen, aus denen ein Kraftstoff eingespritzt wird, gleich wie oder niedriger als eine vorbestimmte Anzahl ist.

7. Vorrichtung zur Schätzung einer Temperatur eines Gasgemisches für eine Brennkraftmaschine nach einem der Ansprüche 1 bis 6, wobei die Einrichtung zur Schätzung einer Temperatur eines Gases im Zylinderinnenraum die Temperatur des Gases im Zylinderinnenraum gemäß der Annahme schätzt, dass der Zustand des Gases im Zylinderinnenraum, das innerhalb der Brennkammer begrenzt ist, sich adiabat mit einer Bewegung eines Kolbens verändert.

8. Vorrichtung zur Schätzung einer Temperatur eines Gasgemisches für eine Brennkraftmaschine nach einem der Ansprüche 1 bis 7, wobei die Einrichtung zur Schätzung einer Temperatur eines Vorgasgemisches die Temperatur des Vorgasgemisches durch Anwendung der Temperatur des Gases im Zylinderinnenraum schätzt.

9. Vorrichtung zur Schätzung einer Temperatur eines Gasgemisches für eine Brennkraftmaschine nach einem der Ansprüche 1 bis 8, wobei die Bestimmungseinrichtung, ob das Hauptgasgemisch das stagnierende Vorgasgemisch erreicht hat, auf der Basis der Position eines vordersten Abschnitts des Hauptgasgemisches und der radialen Dicke des Vorgasgemisches bestimmt, das in der im Allgemeinen ringförmigen Anordnung stagniert.

10. Vorrichtung zur Schätzung einer Temperatur eines Gasgemisches für eine Brennkraftmaschine nach Anspruch 9, wobei die Position des vordersten Abschnitts des Hauptgasgemisches als eine Funktion nach der Zeit, die nach dem Start der Haupteinspritzung verstrichen ist, in Übereinstimmung mit einer vorbestimmten empirischen Formel erhalten wird.

11. Vorrichtung zur Schätzung einer Temperatur eines Gasgemisches für eine Brennkraftmaschine nach Anspruch 9 oder 10, wobei die radiale Dicke des Vorgasgemisches auf der Basis eines Volumens, das durch das Vorgasgemisch in Anspruch genommen wird, erhalten wird.

12. Vorrichtung zur Schätzung einer Temperatur eines Gasgemisches für eine Brennkraftmaschine nach Anspruch 11, wobei das Volumen, das durch das Vorgasgemisch in Anspruch genommen wird, von zumindest einer/einem von der Menge an Kraftstoff, die mittels der Voreinspritzung eingespritzt wird, dem Luftüberschussfaktor des stagnierenden Vorgasgemisches, der Temperatur und des Drucks des stagnierenden Vorgasgemisches, und dem Gaszustandsgleichgewicht hinsichtlich des stagnierenden Vorgasgemisches erhalten wird.

**Revendications**

1. Appareil d'estimation de température de mélange gazeux pour un moteur à combustion interne configuré de telle manière que, à chaque cycle opérationnel, du carburant pour une injection pilote est injecté dans une chambre de combustion, et ensuite du carburant pour une injection principale est injecté dans la chambre de combustion, l'appareil d'estimation de température de mélange gazeux comprenant un moyen d'estimation de température de mélange gazeux principal pour estimer une température d'un mélange gazeux principal, qui est un mélange gazeux produit au moyen de l'injection principale, l'appareil d'estimation de température de mélange gazeux étant **caractérisé en ce que** comprenant en outre :

un moyen d'estimation de température de gaz intérieur de cylindre pour estimer une température d'un gaz intérieur de cylindre, qui est un gaz ayant été fait pénétrer dans la chambre de combustion ;
un moyen d'estimation de température de mélange gazeux pilote pour estimer une température d'un mélange gazeux pilote, qui est un mélange gazeux produit au moyen de l'injection pilote ; et
un moyen de détermination pour déterminer si le mélange gazeux principal a atteint le mélange gazeux pilote sous la supposition que le mélange gazeux pilote stagne dans une configuration de façon générale annulaire à proximité d'une paroi latérale de la chambre de combustion, dans lequel
le moyen d'estimation de température de mélange gazeux principal estime la température du mélange gazeux principal en faisant usage de la température du gaz intérieur de cylindre sur une période pendant laquelle le mélange gazeux principal est déterminé ne pas avoir atteint le mélange gazeux pilote stagnant, et estime la température du mélange gazeux principal en faisant usage de la température du mélange gazeux pilote après que le mélange gazeux principal est déterminé avoir atteint le mélange gazeux pilote stagnant.

2. Appareil d'estimation de température de mélange gazeux pour un moteur à combustion interne selon la revendication 1, dans lequel le moyen de détermination est configuré de manière à fixer irrégulièrement l'épaisseur radiale du mélange gazeux pilote stagnant dans une configuration de façon générale annulaire de telle manière que l'épaisseur en une position correspondant au sens d'injection de l'injection pilote est plus épaisse qu'en une position ne correspondant pas au sens d'injection de l'injection pilote.

3. Appareil d'estimation de température de mélange gazeux pour un moteur à combustion interne selon la revendication 2, dans lequel le moyen de détermination est configuré de manière à réduire avec le temps le degré d'irrégularité de l'épaisseur radiale du mélange gazeux pilote stagnant dans une configuration de façon générale annulaire.

4. Appareil d'estimation de température de mélange gazeux pour un moteur à combustion interne selon la revendication 2 ou 3, comprenant en outre un moyen d'obtention de vitesse de flux tourbillonnant pour obtenir une valeur représentant une vitesse d'un flux tourbillonnant produit par un tourbillon, dans lequel le moyen de détermination est configuré pour changer la position correspondant au sens d'injection de l'injection pilote et la position ne correspondant pas au sens d'injection de l'injection pilote, les positions étant fixées par rapport au mélange gazeux pilote stagnant dans une configuration de façon générale annulaire, conformément à la valeur obtenue représentant la vitesse du flux tourbillonnant.

5. Appareil d'estimation de température de mélange gazeux pour un moteur à combustion interne selon la revendication 4, dans lequel la valeur représentant la vitesse du flux tourbillonnant est un régime moteur pour le cas où le rapport de tourbillon est constant.

6. Appareil d'estimation de température de mélange gazeux pour un moteur à combustion interne selon l'une quelconque des revendications 2 à 5, dans lequel le nombre d'ouvertures d'injection desquelles du carburant est injecté est égal ou inférieur à un nombre prédéterminé.

7. Appareil d'estimation de température de mélange gazeux pour un moteur à combustion interne selon l'une quelconque des revendications 1 à 6, dans lequel le moyen d'estimation de température de gaz intérieur de cylindre estime la température du gaz intérieur de cylindre sous la supposition que l'état du gaz intérieur de cylindre confiné au sein de la chambre de combustion change de manière adiabatique avec un mouvement d'un piston.

8. Appareil d'estimation de température de mélange gazeux pour un moteur à combustion interne selon l'une quelconque des revendications 1 à 7, dans lequel le moyen d'estimation de température de mélange gazeux pilote estime la température du mélange gazeux pilote en faisant usage de la température du gaz intérieur de cylindre.

9. Appareil d'estimation de température de mélange gazeux pour un moteur à combustion interne selon l'une quelconque des revendications 1 à 8, dans lequel le moyen de détermination détermine si le mélange gazeux principal a atteint le mélange gazeux pilote stagnant sur la base de la position d'une partie avant du mélange gazeux principal et de l'épaisseur radiale du mélange gazeux pilote stagnant dans la configuration de façon générale annulaire.

10. Appareil d'estimation de température de mélange gazeux pour un moteur à combustion interne selon la revendication 9, dans lequel la position de la partie avant du mélange gazeux principal est obtenue comme une fonction du temps écoulé après le début de l'injection principale conformément à une formule empirique prédéterminée.

11. Appareil d'estimation de température de mélange gazeux pour un moteur à combustion interne selon la revendication 9 ou 10, dans lequel l'épaisseur radiale du mélange gazeux pilote est obtenue sur la base d'un volume occupé par le mélange gazeux pilote.

12. Appareil d'estimation de température de mélange gazeux pour un moteur à combustion interne selon la revendication 11, dans lequel le volume occupé par le mélange gazeux pilote est obtenu à partir d' au moins un de la quantité de carburant injecté au moyen de l'injection pilote, du facteur d'air en excès du mélange gazeux pilote stagnant, de la température et de la pression du mélange gazeux pilote stagnant, et de l'équation d'état du gaz concernant le mélange gazeux pilote stagnant.

**FIG.1**

EP 1 568 876 B1

# FIG.2

**FIG.3**

PILOT GAS
MIXTURE

PILOT GAS
MIXTURE

21

PILOT GAS MIXTURE
FOREFRONT PORTION

24b  24a

θf

CYLINDER
INTERIOR GAS

24d

PISTON 24

24c

24a

FIG.4A

21

PILOT GAS
MIXTURE

PILOT GAS
MIXTURE

24b  24a

24a

CYLINDER
INTERIOR GAS

24d

rc

PISTON 24

24c

FIG.4B

## FIG.5

## FIG.6

**FIG.7**

$$\boxed{\text{CONTROL OF FUEL INJECTION QUANTITY, ETC}} \sim 700$$

DETERMINE INSTRUCTION FUEL INJECTION QUANTITIES qfinp, qfinm FROM Accp, NE, Mapqfin ~705

DETERMINE BASE FUEL INJECTION TIMINGS finjbasep, finjbasem FROM Accp, NE, Mapfinjbase ~710

DETERMINE BASE FUEL INJECTION PRESSURE Pcrbase FROM Accp, NE, MapPcrbase ~715

GAS MIXTURE TEMPERATURE DEVIATION $\Delta$Tmix$\leftarrow$Tmixref–Tmixfinc ~720

DETERMINE INJECTION–TIMING CORRECTION VALUE $\Delta \theta$ FROM $\Delta$Tmix, Map $\Delta \theta$ ~725

DETERMINE INJECTION–PRESSURE CORRECTION VALUE $\Delta$Pcr FROM $\Delta$Tmix, Map$\Delta$Pcr ~730

FINAL FUEL INJECTION TIMINGS finjfinp$\leftarrow$finjbasep+$\Delta \theta$ finjfinm$\leftarrow$finjbasem+$\Delta \theta$ ~735

INSTRUCTION FINAL FUEL INJECTION PRESSURE Pcrfin$\leftarrow$Pcrbase+$\Delta$Pcr ~740

$\sim$745
CRANK ANGLE CA = ANGLE CORRESPONDING TO finjfinp ? — No

Yes $\sim$755
PILOT INJECTION OF QUANTITY qfinp

$\sim$760
qfincp$\leftarrow$qfinp
qfincm$\leftarrow$qfinm
finjcp$\leftarrow$finjfinp
finjcm$\leftarrow$finjfinm
Pcrc$\leftarrow$Pcrfin

$\sim$750
CRANK ANGLE CA = ANGLE CORRESPONDING TO finjcm ? — No

Yes $\sim$765
MAIN INJECTION OF QUANTITY qfincm

$\boxed{\text{RETURN}} \sim 795$

Mapqfin

INSTRUCTION FUEL INJECTION QUANTITY
qfinp, qfinm

LARGE

ACCELERATOR
OPENING
Accp

SMALL

ENGINE SPEED   NE

## FIG.8

Mapfinjbase

BASE FUEL INJECTION TIMING
finjbasep, finjbasem

ADVANCE

ACCELERATOR
OPENING
Accp

DELAY

ENGINE SPEED   NE

## FIG.9

FIG.10

FIG.11

FIG.12

```
        ┌────────────────────────────────────────────────┐
        │ CALCULATION OF VARIOUS PHYSICAL QUANTITIES │──1300
        │        AT PILOT INJECTION START TIMING         │
        └────────────────────────────────────────────────┘
                            │
                    ┌───────────────────────────────────┐  ┌─1305
                    │ CRANK ANGLE CA = ATDC -180° ? │──No
                    └───────────────────────────────────┘
                        │Yes                    ┌─1310
        ┌────────────────────────────────────────────────────┐
        │ BDC CYLINDER INTERIOR GAS TEMPERATURE T bottom←Tb   │
        │ BDC CYLINDER INTERIOR GAS PRESSURE Pbottom ← Pb     │
        │ BDC INTAKE-GAS OXYGEN CONCENTRATION RO2inbottom ← RO2in │
        └────────────────────────────────────────────────────┘
                            │                          ┌─1315
                    ┌───────────────────────────────────────┐
                    │ CRANK ANGLE CA = ANGLE CORRESPONDING TO finjcp ? │──No
                    └───────────────────────────────────────┘
                        │Yes
            ┌──────────────────────────────────────┐
            │ CYLINDER INTERIOR GAS QUANTITY       │──1320
            │ Ma←Pbottom・Vbottom/(Ra・Tbottom)    │
            └──────────────────────────────────────┘
                            │
        ┌──────────────────────────────────────────────┐
        │ CYLINDER INTERIOR GAS DENSITY ρa0p←Ma/Va(CA) │──1325
        └──────────────────────────────────────────────┘
                            │
            ┌──────────────────────────────────────┐
            │ CYLINDER INTERIOR GAS PRESSURE       │──1330
            │ Pa0p←Pbottom・{Vbottom/Va(CA)}ᴷ      │
            └──────────────────────────────────────┘
                            │
        ┌──────────────────────────────────────────────┐
        │ EFFECTIVE INJECTION PRESSURE ΔPp←Pcrc-Pa0p   │──1335
        └──────────────────────────────────────────────┘
                            │
        ┌──────────────────────────────────────────────────┐
        │ PILOT FUEL VAPOR TEMPERATURE Tfp← αcr・Tcr-Qvapor/Cf │──1340
        └──────────────────────────────────────────────────┘
                            │
            ┌──────────────────────────────────────┐
            │ DETERMINE SPRAY ANGLE θp             │
            │                                      │──1345
            │ ΔPp [ θR ] ─Map θ                    │
            │        ρa0p                          │
            └──────────────────────────────────────┘
                            │
            ┌──────────────────────────────────────┐
            │ POST INJECTION TIME tp ← 0           │──1350
            └──────────────────────────────────────┘
                            │
        ┌──────────────────────────────────────────────┐
        │ CAVITY WALL SURFACE ARRIVAL FLAG WALLp ← 0   │──1355
        └──────────────────────────────────────────────┘
                            │
                    ┌────────────┐
                    │  RETURN    │──1395
                    └────────────┘
```

$$\Delta Pp \quad \rho a0p$$

# FIG.13

CALCULATION OF PILOT GAS
MIXTURE TEMPERATURE ─ 1400

IS CRANK ANGLE CA BETWEEN
ANGLE CORRESPONDING TO
finjcp AND ATDC $\theta$ ref ? ⟵1402

No

⟵1495
RETURN

Yes ⟵1404
tp ≠ 0?     No

Yes     ⟵1410

CYLINDER INTERIOR GAS DENSITY
$\rho$ ap←Ma/Va(CA)

⟵1412
DETERMINE FUEL DILUTION RATIO
d $\lambda$ p/dt FROM $\rho$ ap, tp

EXCESS AIR FACTOR
$\lambda$ p← $\lambda$ p+d $\lambda$ p/dt・$\Delta$ t ─ 1414

MASS RATIO(ma/mf)$_p$(k)← $\lambda$ p・stoich ─1416

CYLINDER INTERIOR GAS TEMPERATURE
Ta←Tbottom・(Vbottom/Va(CA)] $^{\kappa-1}$ ─1418

VALUE Ap←[(ma/mf)$_p$(k)−(ma/mf)$_p$(k−1)] / [1+(ma/mf)$_p$(k−1)] ─1420

PILOT GAS MIXTURE TEMPERATURE Tmixp(k)
←[Cmixp(k−1)・Tmixp(k−1)+Ap・Ca・Ta] / [Cmixp(k−1)+Ap・Ca] ─1422

⟵1406
$\lambda$ p←0
Xp←0

⟵1408
Tmixp(k−1)←Tfp
Cmixp(k−1)←Cf
(ma/mf)$_p$(k−1)←0

②

①

FIG.14

FIG.15

CALCULATION OF PILOT
GAS MIXTURE THICKNESS ~1600

1605
IS CRANK ANGLE CA BETWEEN ANGLE
CORRESPONDING TO finjcp AND
ATDC $\theta$ ref & WALLp = 1 ? — No

Yes ⌐1610

PILOT GAS MIXTURE FUEL CONCENTRATION
$\leftarrow [1+\lambda p \cdot (m+n/4) \cdot \{1+(1-RO2inbottom)/RO2inbottom\}]^{-1}$

PILOT GAS MIXTURE QUANTITY u←qfincp/Rfuelp —1615

CYLINDER INTERIOR GAS PRESSURE
$Pa \leftarrow Pbottom \cdot \{Vbottom/Va(CA)\}^{\kappa}$ ~1620

PILOT GAS MIXTURE VOLUME
$Vmixp \leftarrow \{u \cdot R \cdot Tmixp(k)\}/Pa$ ~1625

1630
PILOT GAS MIXTURE THICKNESS $rc \leftarrow a-\sqrt{\pi b \cdot (\pi a^2 \cdot b - Vmixp)}$

CORRECTION OF rc —1635

RETURN —1695

FIG.16

CALCULATION OF VARIOUS PHYSICAL QUANTITIES
AT MAIN INJECTION START TIMING ~1700

CRANK ANGLE CA = ANGLE
CORRESPONDING TO finjcm ? 〜1705 No

Yes

CYLINDER INTERIOR GAS DENSITY
$\rho\, a0m \leftarrow (Ma+qfincp)/Va(CA)$ ~1710

CYLINDER INTERIOR GAS PRESSURE
$Pa0m \leftarrow Pbottom \cdot \{Vbottom/Va(CA)\}^{\kappa}$ ~1715

EFFECTIVE INJECTION PRESSURE
$\Delta Pm \leftarrow Pcrc{-}Pa0m$ ~1720

MAIN FUEL VAPOR TEMPERATURE
$Tfm \leftarrow \alpha\, cr \cdot Tcr{-}Qvapor/Cf$ ~1725

DETERMINE SPRAY ANGLE $\theta$ m

$\Delta Pm$ [ $\theta m$ ] ~Map $\theta$ ~1730

$\rho\, a0m$

POST INJECTION TIME tm ← 0 ~1735

STAGNATING PILOT GAS MIXTURE
ARRIVAL FLAG WALLm ← 0 ~1740

RETURN ~1795

FIG.17

CALCULATION OF MAIN GAS MIXTURE TEMPERATURE ~1800

1802

No / IS CRANK ANGLE CA BETWEEN ANGLE CORRESPONDING TO finjcm AND ATDC $\theta$ ref ? \

1895

RETURN

Yes 1804
No
< tm ≠ 0? >

Yes 1810

CYLINDER INTERIOR GAS DENSITY
$\rho$ am←(Ma+qfincp)/Va(CA)

1812

DETERMINE FUEL DILUTION RATIO
d$\lambda$m/dt FROM $\rho$am, tm

1814

EXCESS AIR FACTOR
$\lambda$m← $\lambda$m+d$\lambda$m/dt· $\Delta$t

1806

$\lambda$m←0
Xm←0

1808

Tmixm(k−1)←Tfm
Cmixm(k−1)←Cf
(ma/mf)m(k−1)←0

②

MASS RATIO(ma/mf)m(k)← $\lambda$m·stoich ─1816

1818
No
< WALLm=0? >

Yes 1820

CYLINDER INTERIOR GAS TEMPERATURE
Ta←Tbottom· [Vbottom/Va(CA)] $^{\kappa-1}$

1822

PERIPHERAL GAS TEMPERATURE
Ts←Ta

1824

PERIPHERAL GAS SPECIFIC HEAT
Cs←Ca

1850

Ts←Tmixp(k)

1852

Cs←Cmixp(k−1)

VALUE Am← [(ma/mf)m(k)−(ma/mf)m(k−1)] / [1+(ma/mf)m(k−1)] ─1826

MAIN GAS MIXTURE TEMPERATURE Tmixm(k)
← [Cmixm(k−1)·Tmixm(k−1)+Am·Cs·Ts] / [Cmixm(k−1)+Am·Cs] ─1828

①

FIG.18

FIG.19

PILOT GAS
MIXTURE

21

PILOT GAS MIXTURE
FOREFRONT PORTION

24b     24a

θ f

CYLINDER
INTERIOR GAS
24d

PISTON 24

24c

PILOT GAS
MIXTURE

Y

24a

X

SMALL NUMBER (FOUR)
OF INJECTION OPENINGS

FIG.20A

21     PILOT GAS
MIXTURE

24b     24a

CYLINDER
INTERIOR GAS
24d

PISTON 24

24c

PILOT GAS
MIXTURE

Y

24a

X

SMALL NUMBER (FOUR)
OF INJECTION OPENINGS

FIG.20B

**FIG.21**

FIG.22

CORRECTION OF rc —2300

VALUE OF WALLp: 2305
0→1? No

Yes

ELAPSED TIME texp←0 —2310

2315

HAS CRANK ANGLE CA PASSED THROUGH
ANGLE CORRESPONDING TO finjcm ? No

Yes 2325

CORRECTION OF rc
rc←rc{1+exp(-texp/B)·cos(4·θsc)}

texp←texp+Δt —2320

RETURN —2395

# FIG.23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001254645 A

**Non-patent literature cited in the description**

- **Yutaro WAGURI ; Masaru FUJII ; Tatsuo AMIYA ; Reijiro TSUNEYA.** Study on Injected Fuel Travel Distance in Diesel Engine. *Transactions of the Japanese Society of Mechanical Engineers,* 1959, 820, 25-156